# EUROPEAN PATENT SPECIFICATION

(11) **EP 2 933 488 B1**
(45) Date of publication and mention of the grant of the patent: **30.09.2020**
(21) Application number: 13862397.0
(22) Date of filing: 11.12.2013
(51) Int. Cl.: F04B 39/02, F04B 39/10, F04B 35/04, F04C 29/12, F04C 18/02, F16K 15/16, C10M 103/02, C10M 103/06, C10M 107/38

(54) **METHOD FOR MANUFACTURING A COMPRESSOR**
VERFAHREN ZUR HERSTELLUNG EINES VERDICHTERS
PROCÉDÉ DE FABRICATION D'UN COMPRESSEUR

(30) Priority: 11.12.2012 JP 2012269989; 11.12.2012 JP 2012269990; 11.12.2012 JP 2012269991; 11.12.2012 JP 2012269995; 07.11.2013 JP 2013230936; 07.11.2013 JP 2013230937; 08.11.2013 JP 2013231874
(43) Date of publication of application: 21.10.2015
(73) Proprietor: Panasonic Intellectual Property Management Co., Ltd., Osaka 540-6207 (JP)
(72) Inventor: ISHIDA, Yoshinori, Chuo-ku, Osaka, 5406207 (JP); FUTAGAMI, Yoshiyuki, Chuo-ku,Osaka, 540-6207 (JP); FUKUHARA, Hiroyuki, Chuo-ku, Osaka, 540-6207 (JP); KAWABATA, Hirotaka, Chuo-ku, Osaka, 540-6207 (JP); YAMAOKA, Masakazu, Chuo-ku, Osaka, 540-6207 (JP)
(74) Representative: Eisenführ Speiser
(86) International application number: PCT/JP2013/007290
(87) International publication number: WO 2014/091757

(56) References cited:
- WO-A1-2007/086202
- WO-A1-2012/074107
- JP-A- S5 868 562
- JP-A- S6 053 213
- JP-A- H08 267 650
- JP-A- H09 280 167
- JP-A- 2005 337 129
- JP-A- 2008 002 387
- JP-A- 2012 137 010
- JP-U- S6 116 470

## Description

### Technical Field

The present invention relates to a manufacturing method of a compressor, which can improve efficiency and reliability in the compressor which is primarily used in a home refrigerator.

### Background Art

To achieve energy saving of home refrigerators, the efficiency of a compressor has been increased, because of the changeable speed operation of an inverter, an increased changeable speed range realized with sensor control, the use of refrigerant oil with a low viscosity, etc.. With the increase in the efficiency of the compressor, compression components of the compressor have been forced to slide in harsh conditions.

An exemplary conventional compressor includes an electric motor unit, and a compression/mechanical unit activated by the electric motor unit, in which a solid lubricant is applied as a synthetic resin agent on the slide surface of a crankshaft included in the compression/mechanical unit (e.g., see Patent Literature 1).

Another exemplary conventional compressor includes a valve seat plate (valve plate) which has a suction hole which is provided with a valve seat in an opening thereof, and is attached to the end portion of a cylinder, and a suction reed valve which is placed between the end portion of the cylinder and the valve seat plate and opens and closes the suction hole with a lid member (e.g., see Patent Literature 2).

In general, the valve plate has a recess provided with a suction hole, a discharge hole, and a discharge valve. For this reason, the valve plate has a complex shape. To improve a productivity, the valve plate is made of a sintered metal material.

Japanese patent application 2005-337129 A discloses a sintered sliding member having a base material made of metal and a slide layer of resin powder integrally sintered onto at least one surface of the base material. A solid lubricant powder is contained in the slide layer. Further, the sliding member may have an intermediate layer interposed between the base material and the slide layer and comprise a metal different to the one of the base material.

### Citation List

### Patent Literature

Patent Literature 1: Japanese Laid-Open Patent Application Publication No. Hei. 2-176195
Patent Literature 2: Japanese Laid-Open Patent Application Publication No. 2000-45949
Patent Literature 3: Japanese Laid-Open Patent Application Publication No. 2005-337129 A

### Summary of Invention

### Technical Problem

In a reciprocating compressor, due to a difference between a pressure in the interior of a compression chamber and a pressure in the interior of a suction muffler, a suction valve contacts (hits) a suction valve seat located around a suction hole, and then closes the suction hole. Repeated hit (collision) between these metal members causes an accumulated metal fatigue in a portion of the suction valve and a portion of the suction valve seat which portions contact each other.

Also, under the recent circumstances in which higher efficiency is required to be attained, due to reduction of the thickness of the suction valve formed of a steel plate and the changeable speed rotation mode with the use of inverter driving, the above mentioned metal fatigue is accumulated more and more, and break or crack tends to occur in the contact portion of the suction valve. This is a first problem. The same problem arises in a discharge valve and a discharge valve seat.

Since the valve plate is made of a sintered metal material, the valve plate has vacancies which are unique to the sintered metal material. Due to the leakage of the refrigerant through the vacancies, in the suction valve seat provided on the valve plate to surround the suction hole and the discharge valve seat provided on the valve plate to surround the discharge hole, the efficiency of the compressor is reduced. This is the second problem.

If the refrigerant oil (lubricating oil) with a low viscosity is used to achieve energy saving, the lubricating oil staying between the suction valve seat and the suction valve or between the discharge valve seat and the discharge valve is reduced, and thereby the sealing performance of the lubricating oil is reduced. This causes the refrigerant (working fluid) to flow back. As a result, the efficiency of the compressor is reduced significantly.

Also, when the suction valve or the discharge valve being closed hits the suction valve seat or the discharge valve seat, a hit noise is generated and leaks to outside a sealed container, and as a result, a noise is generated. This is a third problem. In a case where inverter driving for electric components is used to attain the high efficiency of the compressor, a noise generated in the electric components is reduced when the compressor is operated at a low speed. In this case, a noise generated when the suction valve hits the suction valve seat or a noise generated when the discharge valve hits the discharge valve seat is noticeable, which causes a noise.

An object of the present invention is to provide a manufacturing method of a compressor, which can solve the above described first to third problems.

In a reciprocating compressor, since the compression component is supported in a cantilever manner. Therefore, when a compression load is applied to an eccentric shaft via a connecting means, a main shaft whirls in an inclined state inside a main bearing and slides in contact with local regions of the upper end portion and lower end portion of the main bearing, i.e., in a partial contact state. When the main shaft continues to slide in the partial contact state, the solid lubricant abrades away and thereby the crankshaft abrades away in a refrigerant pump disclosed in the above Patent Literature 1. As a result, it is difficult to maintain the performance of the compressor for a long period of time, or ensure the reliability of the compressor. This is a fourth problem.

Another object of the present invention is to provide a manufacturing method of a compressor, which can solve the above fourth problem.

### Solution to Problem

A contact member and a compressor comprising the contact member, according to an example useful for understanding the present invention, comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

In this configuration, even when contact in a local region of the contact surface occurs, the synthetic resin of the coating layer located at the outermost side abrades away. In this way, the convex portions of roughness vanish at an earlier time, and the solid lubricant is exposed on the outer surface of the surface treatment film. As a result, the impact force can be mitigated effectively.

In addition, since the coating layer located at the innermost side has high adhesiveness to the base member of the contact member, it becomes possible to suppress separation of the interface of the surface treatment film from the base member, or separation of the inner portion of the surface treatment film. Thus, the performance of the contact member can be maintained for a long period of time, and the reliability of the contact member and hence the compressor can be ensured.

A contact member and a compressor comprising the contact member, according to an example useful for understanding the present invention, comprises a surface treatment film including two or more coating layers stacked together, in at least a portion of a contact surface thereof, each of the coating layers includes synthetic resin, and the coating layer located at an innermost side is larger in elastic deformation amount than the coating layer located at an outermost side.

In this configuration, even when contact in a local region of the contact surface occurs, the coating layer located at the innermost side (closer to the base member) is elastically deformed, and thus, the impact force can be mitigated effectively.

In addition, since the coating layer located at the outermost side has high strength and high abrasion resistance, it becomes possible to suppress chipping (separation) or abrasion, and galling of the surface treatment film. As a result, the performance of the contact member and hence the compressor can be maintained for a long period of time, and improved.

A slide member and a compressor comprising the slide member, according to an example useful for understanding the present invention, comprises a surface treatment film including two or more coating layers stacked together, in at least a portion of a slide surface thereof, each of the coating layers includes synthetic resin and a solid lubricant, and the solid lubricant of the coating layer located at an innermost side is lower in content percentage than the solid lubricant of the coating layer located at an outermost side.

As defined herein, the content percentage of the solid lubricant in the coating layer refers to a ratio of the volume of the solid lubricant with respect to the unit volume of the coating layer (volume percentage; vol/vol). For example, the solid lubricant with a smaller friction coefficient and with a smaller average particle diameter is placed in the coating layer of the surface treatment film which is closer to the outer surface of the main shaft (closer to the base member, inner side), while the solid lubricant with a higher abrasion resistance and with a larger average particle diameter is placed in the coating layer of the surface treatment film which is closer to a main bearing (outer side).

In this configuration, even when contact in a local region of the slide surface occurs, the synthetic resin abrades away after the sliding is started. In this way, the convex portions of roughness vanish at an earlier time, and initial abrasion can shift to steady abrasion at an earlier time. Since the solid lubricant is exposed on the outer surface of the surface treatment film, the slide surface which is smooth and has a suitable oil sump can be formed.

Even when the coating layer located at the outermost side abrades away, the coating layer located at the innermost side and including the solid lubricant with a smaller average particle diameter and a smaller friction coefficient allows the performance of the slide member to be maintained for a long period of time. As a result, the reliability of the slide member and hence the compressor can be ensured.

A slide member and a compressor comprising the slide member, according to an example useful for understanding the present invention, comprises a surface treatment film including two or more coating layers stacked together, in at least a portion of a slide surface thereof, each of the coating layers includes synthetic resin, and the coating layer located at an innermost side is larger in elastic deformation amount than the coating layer located at an outermost side.

In this configuration, even when contact in a local region of the slide surface occurs, the coating layer located at the innermost side (closer to the base member) is elastically deformed, and thus, a contact surface pressure can be mitigated significantly. In addition, since the coating layer located at the outermost side has high strength with respect to sliding, the abrasion and separation of the surface treatment film can be suppressed.

A manufacturing method of a compressor of the present invention is defined in claim 1. The method comprises i.a. (A) applying a first coating agent including synthetic resin and a solid lubricant to at least a portion of a slide surface or a contact surface thereof to form a first coating layer; and (B) applying onto the first coating layer a second coating agent including a solid lubricant with a larger average particle diameter than the solid lubricant of the first coating agent to form a second coating layer.

In this method, the performance of the compressor can be maintained for a long period of time.

### Advantageous Effects of Invention

In accordance with the contact member, the slide member, and the compressor comprising the contact member or the slide member, according to an example useful for understanding the present invention, the performance of the contact member or the slide member can be maintained for a long period of time.

In accordance with the manufacturing method of the compressor of the present invention, it becomes possible to realize the compressor which is capable of maintaining its performance for a long period of time.

### Brief Description of Drawings

[Fig. 1] Fig. 1 is a vertical sectional view of a compressor according to Example 1.
[Fig. 2] Fig. 2 is an exploded perspective view of a valve plate and members which are present in the vicinity of the valve plate, of the compressor of Fig. 1.
[Fig. 3] Fig. 3 is a cross-sectional view of the major components of the compressor of Fig. 1.
[Fig. 4] Fig. 4 is an enlarged cross-sectional view of A-part of Fig. 3.
[Fig. 5]Fig. 5 is a cross-sectional view of a surface treatment film and a suction valve seat of the compressor according to Example 1.
[Fig. 6] Fig. 6 is a cross-sectional view of a suction valve seat (contact member) of a compressor according to Example 2.
[Fig. 7] Fig. 7 is a cross-sectional view of a suction valve seat (contact member) of a compressor according to Modified example 1 of Example 2.
[Fig. 8] Fig. 8 is a cross-sectional view of the major components of a compressor according to Example 3.
[Fig. 9] Fig. 9 is an enlarged cross-sectional view of B-part of Fig. 8.
[Fig. 10] Fig. 10 is a cross-sectional view of the major components of a compressor according to Example 4.
[Fig. 11] Fig. 11 is a cross-sectional view of a discharge valve seat (contact member) of the compressor according to Example 4.
[Fig. 12] Fig. 12 is a cross-sectional view of the major components of a compressor according to Example 5.
[Fig. 13] Fig. 13 is a plan view of a suction valve of Fig. 12.
[Fig. 14] Fig. 14 is a cross-sectional view of a suction valve (contact member) of a compressor according to Example 6.
[Fig. 15] Fig. 15 is a cross-sectional view of the major components of a compressor according to Example 7.
[Fig. 16] Fig. 16 is a plan view of a discharge valve of Fig. 15.
[Fig. 17] Fig. 17 is a cross-sectional view of a discharge valve (contact member) of a compressor according to Example 8.
[Fig. 18] Fig. 18 is a cross-sectional view of the major components of a compressor according to Example 9.
[Fig. 19] Fig. 19 is a cross-sectional view of the major components of a compressor according to Example 10.
[Fig. 20] Fig. 20 is a vertical sectional view of a compressor according to Example 11.
[Fig. 21] Fig. 21 is an enlarged cross-sectional view of C-part of Fig. 20.
[Fig. 22] Fig. 22 is a schematic view showing the major components of the compressor in a state in which a main shaft is sliding in the state of partial contact with a bearing section.
[Fig. 23] Fig. 23 is a cross-sectional view of a main shaft (slide member) of the compressor according to Modified example 1 of Example 11.
[Fig. 24] Fig. 24 is a vertical sectional view of a compressor according to Example 12.
[Fig. 25] Fig. 25 is an enlarged cross-sectional view of D-part of Fig. 24.
[Fig. 26] Fig. 26 is a schematic view showing the configuration of a pneumatic syringe dispenser device.
[Fig. 27] Fig. 27 is a schematic view showing the outline of manufacturing a surface treatment film, by using the device of Fig. 26.
[Fig. 28] Fig. 28 is a vertical sectional view of a compressor according to Modified example 1 of Example 12.
[Fig. 29] Fig. 29 is an enlarged cross-sectional view of E-part of Fig. 28.

### Detailed Description

Hereinafter, the embodiments of the present invention as well as the examples useful for understanding the present invention will be described with reference to the drawings. Throughout the drawings, the same or corresponding components are designated by the same reference symbols and will not be described repeatedly. Throughout the drawings, the elements required to explain the present invention are shown and the other elements are not shown in some cases. Furthermore, the present invention is not limited to the embodiments described below.

### (Example 1)

A compressor according to Example 1 comprises a cylinder which accommodates a reciprocatable piston therein; a valve plate placed at an opening end of the cylinder and includes a suction valve seat provided to surround a suction hole; and a suction valve which opens and closes the suction hole, wherein at least one of the suction valve seat and a portion of the suction valve which portion contacts the suction valve seat is provided with a surface treatment film including synthetic resin.

In the compressor according to Example 1, the surface treatment film may include a solid lubricant.

In the compressor according to Example 1, the surface treatment film may have a thickness of 1µm to 20µm.

In the compressor according to Example 1, the synthetic resin may comprise at least one resin selected from a resin group consisting of polyamide resin, epoxy resin, and phenol resin.

In the compressor according to Example 1, the solid lubricant may comprise at least one compound selected from a compound group consisting of molybdenum disulfide, graphite, polytetrafluoroethylene resin, and antimony trioxide.

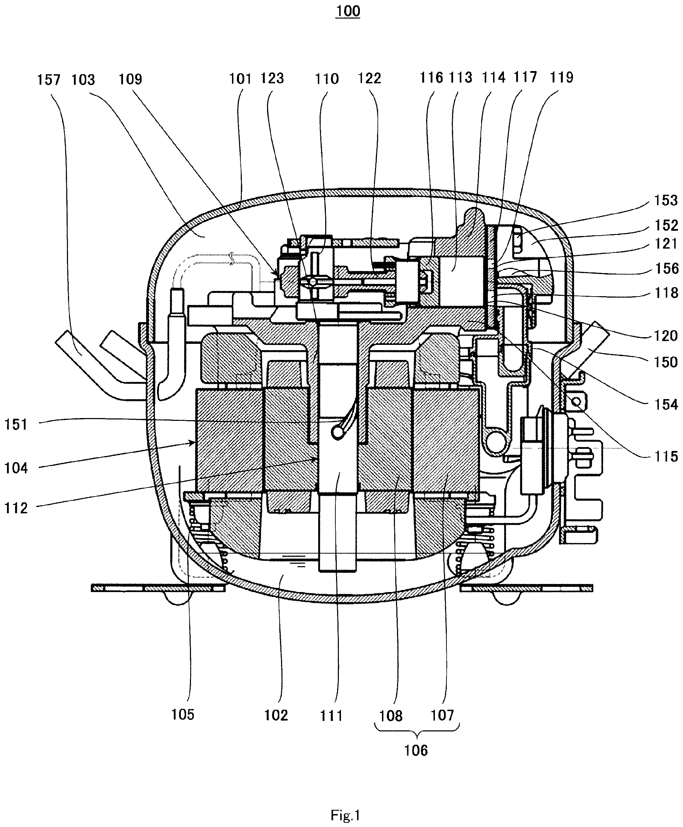

Now, as an exemplary compressor according to Example 1, a compressor including a suction valve seat provided with a surface treatment film will be described with reference to Figs. 1 to 5.

### [Configuration of compressor]

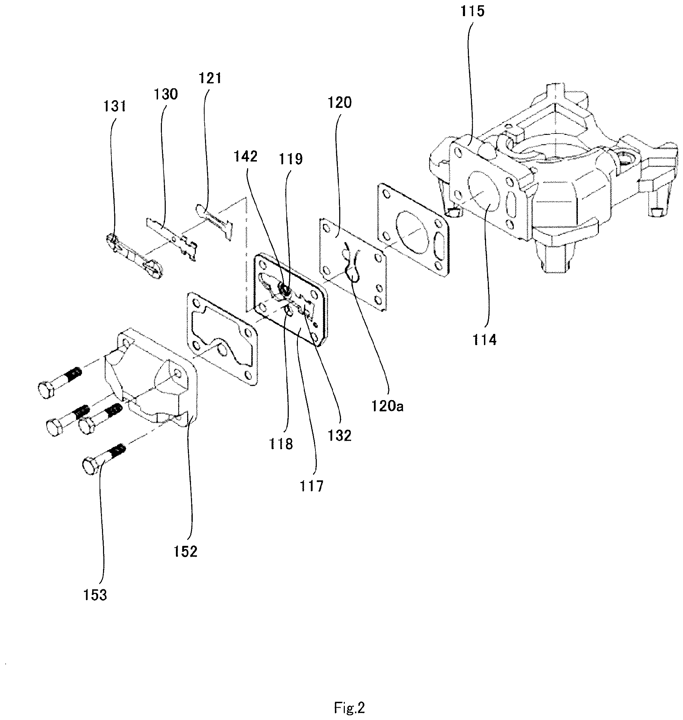

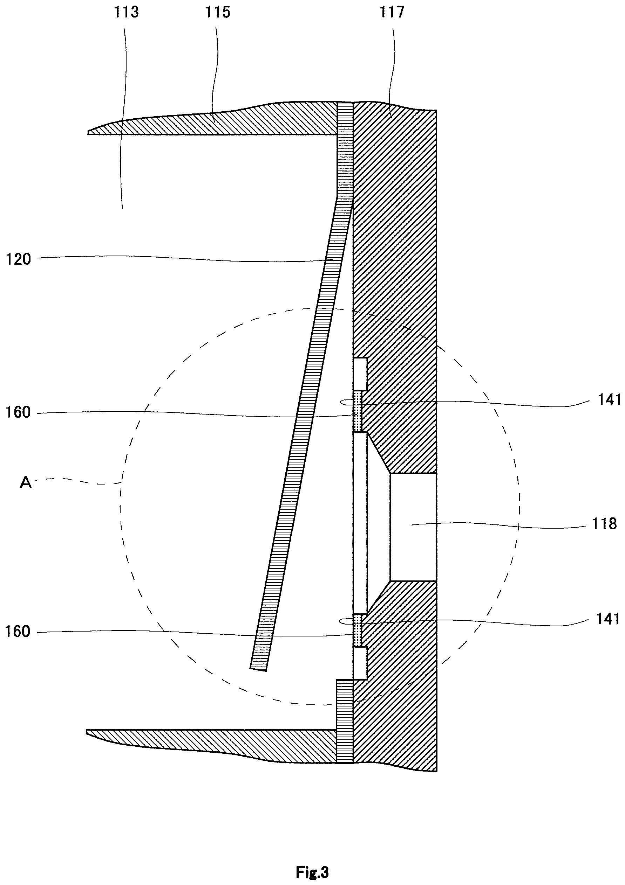

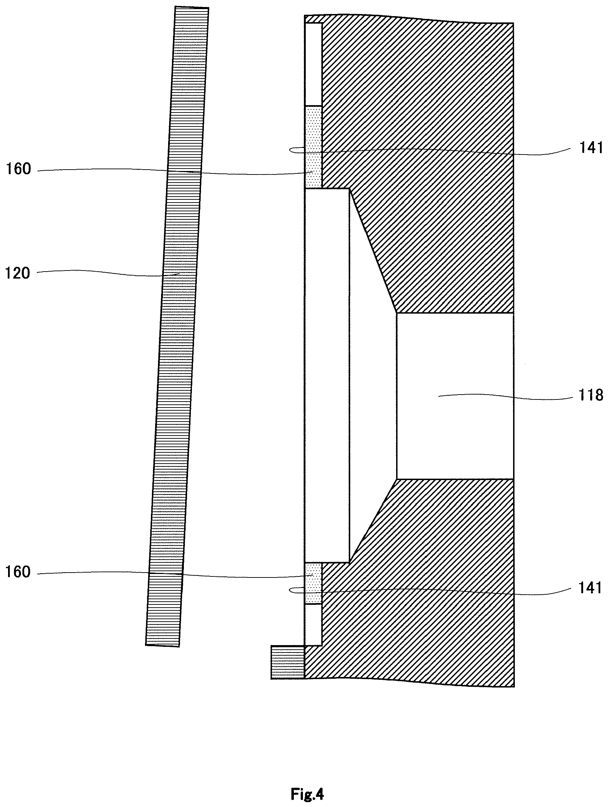

Fig. 1 is a vertical sectional view of a compressor according to Example 1. Fig. 2 is an exploded perspective view of a valve plate and members which are present in the vicinity of the valve plate, of the compressor of Fig. 1. Fig. 3 is a cross-sectional view of the major components of the compressor of Fig. 1. Fig. 4 is an enlarged cross-sectional view of A-part of Fig. 3.

As shown in Fig. 1, a sealed compressor 100 according to Example 1 includes a sealed container 101 and a compressor body 104 accommodated into the sealed container 101. The sealed container 101 is filled with, for example, refrigerant (working fluid) 103. Lubricating oil (refrigerant oil) 102 is stored in a bottom portion of the sealed container 101. As the lubricating oil 102, for example, mineral oil with a low viscosity may be used. As the refrigerant 103, for example, hydrocarbon-based R600a (isobutane) with a low global warming potential may be used.

The sealed container 101 is manufactured by a drawing process of an iron plate. The sealed container 101 is provided with a suction pipe 150 and a discharge pipe 157. One end of the suction pipe 150 is in communication with the interior of the sealed container 101, and the other end of the suction pipe 150 is connected to an evaporator (not shown) at the low-pressure side of a refrigeration cycle via a suitable pipe. One end of the discharge pipe 157 is in communication with a discharge muffler (not shown), and the other end of the discharge pipe 157 is connected to a condenser (not shown) at the high-pressure side of a refrigeration cycle via a suitable pipe.

The compressor body 104 includes a compression component 109 and an electric component 106, and is elastically supported on the sealed container 101 by a suspension spring 105. In Example 1, the electric component 106 is placed below the compression component 109 (at a lower side in the interior of the sealed container 101), and includes a stator 107 and a rotor 108.

The stator 107 is threadingly fastened to the lower side of a block 115 (described later) by means of a bolt (not shown). The rotor 108 is fastened to the main shaft 111 as will be described later such that the rotor 108 is coaxial with the stator 107, in a position inward relative to the stator 107, by shrink-fitting or press-in. The electric component 106 is configured to be activated in any one of plural operation frequencies including an operation frequency (e.g., 25Hz = 1500r/min) which is lower than a utility power supply frequency, by an inverter driving circuit.

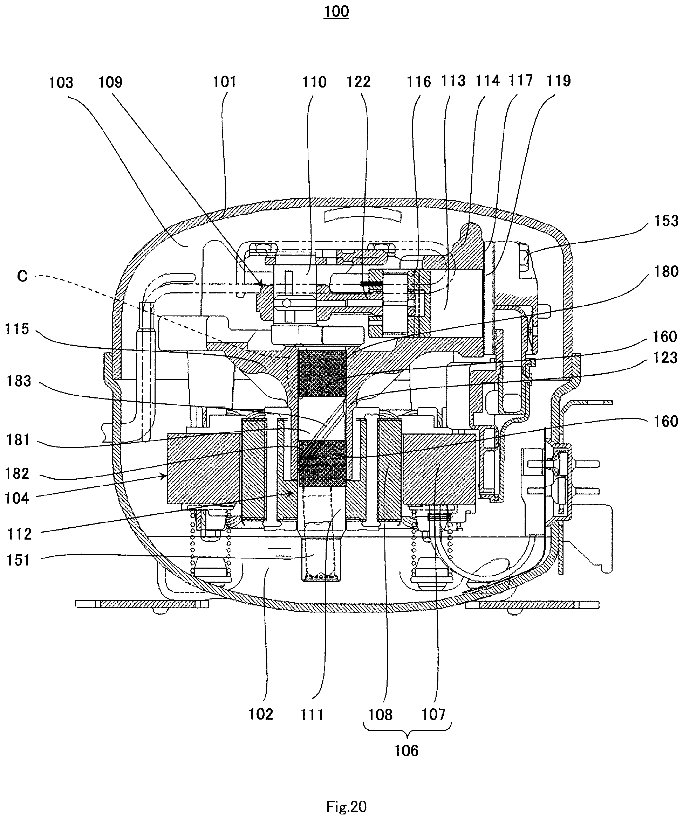

The compression component 109 includes a crankshaft 112, the block 115, a piston 116, a connecting means (connecting rod) 122, and others. The crankshaft 112 includes the main shaft 111 having a center axis vertically extending, an eccentric shaft 110 connected to the lower end of the main shaft 111, and an oil feeding mechanism 151. The oil feeding mechanism 151 includes a spiral groove 183 (see Fig. 20) provided on the surface of the main shaft 111, etc.. The oil feeding mechanism 151 is configured to feed the lubricating oil 102 to a bearing section (main bearing) 123, the connecting means 122, and others.

The block 115 is provided with a cylinder 114 defining a compression chamber 113 and the bearing section 123 to which the main shaft 111 is rotatably mounted such that the cylinder 114 and the bearing section 123 are integrated with the block 115. The piston 116 is inserted into the cylinder 114 such that the piston 116 is extendable and retractable. The eccentric shaft 110 is connected to the piston 116 via the connecting means 122.

As shown in Figs. 1 and 2, a suction valve 120, a valve plate 117 and a cylinder head 152 are provided on the end surface of the cylinder 114. Specifically, the suction valve 120, the valve plate 117, and the cylinder head 152 are placed in this order, from the perspective of the end surface of the cylinder 114. These members are pressingly fastened to the end surface of the cylinder 114 by a head bolt 153 such that these members seal the end surface of the cylinder 114.

A suction muffler 154 is retained between the valve plate 117 and the cylinder head 152 (see Fig. 1). Ahead space 156 is defined by the valve plate 117 and the cylinder head 152.

The valve plate 117 is molded by using a sintered metal material, and the main surface of the valve plate 117 which is closer to the cylinder head 152 is provided with a recess 132 (see Fig. 2). The bottom surface of the recess 132 has a discharge hole 119 which allows communication between the interior and exterior of the compression chamber 113. The bottom surface of the recess 132 is provided with a ring-shaped discharge valve seat 142 which contacts the discharge valve 121.

The discharge valve 121 which opens and closes the discharge hole 119, a spring reed 130 which elastically supports the discharge valve 121, and a valve stop 131 for fastening the discharge valve 121 and the spring reed 130 to each other are placed in the recess 132.

The main surface of the valve plate 117 has a suction hole 118 which allows communication between the interior and the exterior of the compression chamber 113. The suction hole 118 has a shape in which its opening which is closer to the cylinder 114 is larger than its opening which is closer to the cylinder head 152. A ring-shaped suction valve seat 141 is provided on the opening of the suction hole 118, which is closer to the cylinder 114, in the valve plate 117, so as to surround the suction hole 118.

The suction valve 120 is formed of a steel metal, and is configured to open and close the suction hole 118. Specifically, a U-shaped opening/closing section 120a is provided on the suction valve 120 in a location corresponding to the discharge hole 119. The U-shaped opening/closing section 120a is adapted to contact the suction valve sheet 141 of the valve plate 117. A surface treatment film 160 is provided on the suction valve seat 141 (to be precise, outer surface of the suction valve seat 141) of the valve plate 117. In Example 1, the surface treatment film 160 is composed of a single coating layer.

### [Configuration of surface treatment film]

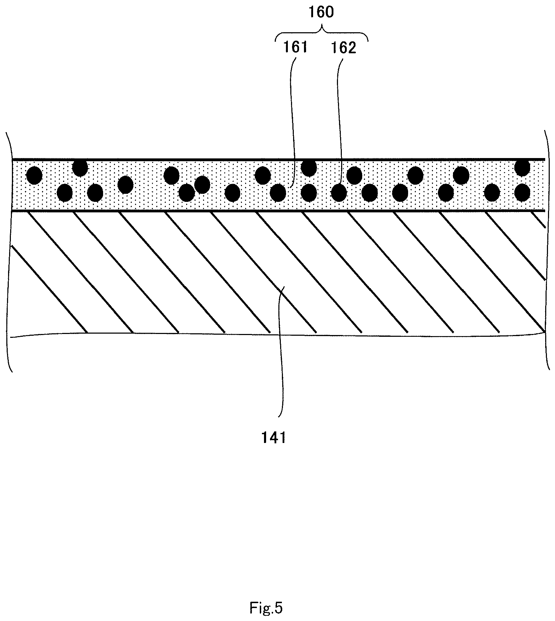

Next, the configuration of the surface treatment film 160 of the compressor 100 according to Example 1 will be described in detail with reference to Figs. 1 to 5. Fig. 5 is a cross-sectional view of the surface treatment film and the suction valve seat of the compressor according to Example 1.

As shown in Figs. 1 to 5, the surface treatment film 160 is provided so as to surround the suction hole 118. In Example 1, the surface treatment film 160 has a ring-shape. The surface treatment film 160 may have any shape so long as it surrounds the suction hole 118, and may have, for example, a rectangular shape.

The surface treatment film 160 may be coplanar with the main surface of the valve plate 117 (main surface which is closer to the cylinder 114), or may protrude from the main surface of the valve plate 117. The thickness of the surface treatment film 160 may be set equal to or larger than 1µm for the improvement of the seal performance. To allow the surface of the surface treatment film 160 to be located within the dimension tolerance of the main surface of the valve plate 117, the thickness of the surface treatment film 160 may be set equal to or smaller than 20µm.

The surface treatment film 160 includes synthetic resin 161. In Example 1, the synthetic resin 161 comprises polyamide-imide (PA1). The surface treatment film 160 includes a solid lubricant 162. In Example 1, the solid lubricant 162 comprises molybdenum disulfide (MoS₂). More specifically, in Example 1, the surface treatment film 160 includes the synthetic resin 161 comprising polyamide-imide (PAI) as a binder, and molybdenum disulfide particles as the solid lubricant 162 which are dispersed substantially uniformly in the synthetic resin 161.

Although in Example 1, the synthetic resin 161 comprising polyamide-imide is used as the binder, the present invention is not limited to this. The synthetic resin 161 may be any resin so long as it is thermosetting resin and has a high resistance to oil, heat, refrigerant, and an organic agent. The synthetic resin 161 may comprise at least one resin selected from a resin group consisting of polyamide resin, epoxy resin, and phenol resin.

Although in Example 1, molybdenum disulfide (MoS₂) is used as the solid lubricant 162 dispersed in the surface treatment film 160, the present invention is not limited to this. The solid lubricant 162 may comprise at least one compound selected from a compound group consisting of molybdenum disulfide, graphite (G), polytetrafluoroethylene resin (PTFE), and antimony trioxide (Sb₂O₃).

In a case where molybdenum disulfide and/or graphite is used as the solid lubricant 162, the surface treatment film 160 may also comprise antimony trioxide. In this case, antimony trioxide captures air or oxygen which has entered the surface treatment film 160 and is oxidated. This makes it possible to suppress the change of properties of molybdenum disulfide and/or graphite, which would otherwise occur due to oxidation. Thus, the abrasion of the surface treatment film 160 can be suppressed effectively.

### [Manufacturing method of surface treatment film]

Next, the manufacturing method of the surface treatment film 160 will be described.

Initially, preliminary heating is conducted to increase the temperature of the valve plate 117 up to a predetermined temperature (only a region which is in the vicinity of the suction valve seat 141 may be heated in this heating). This is intended to vaporize an organic solvent dissolving (solving) in the surface treatment film 160 applied on the suction valve seat 141 so that the surface treatment film 160 is applied uniformly to the suction valve seat 141.

Then, prepared is a surface treatment agent (coaling agent) with a specified viscosity which is produced by adjusting a liquid agent including the synthetic resin 161 and the solid lubricant 162 dispersed in the synthetic resin 161 with a diluting agent comprising an organic solvent. Then, this surface treatment agent is applied to the suction valve seat 141 of the valve plate 117 by spraying. To prevent the surface treatment agent from adhering onto a region which does not require the application of the surface treatment agent, the valve plate 117 may be attached with a masking jig of a suitable shape, or the surface treatment agent may be applied to the suction valve seat 141 by using the pneumatic syringe dispenser device.

Thereafter, drying is temporarily conducted for several minutes under a temperature which is substantially as high as the temperature in the preliminary heating to dry the surface of the surface treatment film 160. At a stage in which the surface of the surface treatment film 160 is dried, buffing is conducted a little in order to finely adjust the surface roughness of the outer surface of the surface treatment film 160 into good one. Desirably, a buff used in the buffing is a horse hair buff, rather than a nylon buff containing abrasive grains or a relatively hard steel buff.

Finally, calcining is conducted under a temperature of about 180 degrees C to 230 degrees C for about 30 minutes to 2 hours, to vaporize all of the diluting agent in the surface treatment agent. In this way, the surface treatment film 160 is allowed to completely adhere to the suction valve seat 141.

### [Operation of compressor]

Next, the operation of the sealed compressor 100 according to Example 1 will be described with reference to Figs. 1 to 4.

Initially, when the electric component 106 is applied with a current, the current flows through the stator 107, to generate a magnetic field, causing the rotor 108 fastened to the main shaft 111 to rotate. According to the rotation of the rotor 108, the crankshaft 112 rotates, and the rotational motion of the eccentric shaft 110 is converted into a linear reciprocation motion via the connecting means 122. The piston 116 reciprocates within the cylinder 114.

According to the reciprocation motion of the piston 116, the refrigerant 103 is suctioned into the interior of the compression chamber 113 via the suction muffler 154. The refrigerant 103 suctioned into the interior of the compression chamber 113 is compressed therein and thereafter is discharged to a refrigeration cycle (not shown) through the discharge hole 119 and the head space 156. The refrigerant 103 discharged to the refrigerant cycle performs heat exchange while it is flowing through the refrigeration cycle, and is suctioned into the compression chamber 113 again.

Next, the suction stroke and the compression stroke of the compressor 100 will be described more specifically.

In the suction stroke, when the piston 116 moves in a direction to increase the volume of the compression chamber 113, the refrigerant 103 in the interior of the compression chamber 113 expands. When a pressure in the interior of the compression chamber 113 falls below a pressure in the interior of the suction muffler 154, the suction valve 120 starts to be opened due to a difference between the pressure in the interior of the compression chamber 113 and the pressure in the interior of the suction muffler 154. According to this operation, the low-temperature refrigerant 103 which has returned from the refrigeration cycle is released to the interior of the sealed container 101 from the suction pipe 150. Then, the refrigerant 103 flows into the compression chamber 113 through the suction muffler 154.

After that, in the compression stroke, when the piston 116 moves from the bottom dead center in a direction to reduce the volume of the interior of the compression chamber 113, the pressure in the interior of the compression chamber 113 is increased. Due to a difference between the pressure in the interior of the compression chamber 113 and the pressure in the interior of the suction muffler 154, the suction valve 120 is closed, and thereby the compression chamber 113 is closed. When the piston 116 moves in the direction to reduce the volume of the interior of the compression chamber 113, the refrigerant 103 is compressed, and the pressure in the interior of the compression chamber 113 is increased to a specified pressure.

In the discharge stroke, when the pressure of the refrigerant 103 in the interior of the compression chamber 113 is increased, becomes higher the pressure in the interior of the head space 156, and exceeds a force for elastically deforming the discharge valve 121, the discharge hole 119 is opened. Thereby, the refrigerant 103 in the interior of the compression chamber 113 flows into the head space 156 through the discharge hole 119. Then, the refrigerant 103 flows through the head space 156 and a discharge muffler (not shown), and is discharged to the high-pressure side (not shown) of the refrigeration cycle through the discharge pipe 157.

When a pressure difference between the head space 156 and the compression chamber 113 is decreased, and a force generated due to the pressure difference and applied to the discharge valve 121 becomes smaller than the restoration force of the spring reed 130 and the discharge valve 121, the discharge valve 121 is closed, the compression chamber 113 is closed, and the piston 116 moves toward the bottom dead center. Thus, the discharge stroke shifts to the suction stroke again.

### [Advantage of compressor]

Next, the advantage of the compressor 100 according to Example 1 will be described with reference to Figs. 1 to 5.

In general, the valve plate 117 is provided with the suction valve seat 141, the discharge valve seat 142, etc., and therefore has a complex shape. To improve a productivity, and reduce cost, the valve plate 117 is molded using a sintered metal material.

Since the sintered metal material is typically molded by pouring metal powder into a die, then pressurizing the metal powder and heating the metal powder, it has continuous vacancies on its surface and inside thereof. For this reason, the efficiency of the compressor may be reduced, due to the leakage of the refrigerant through the vacancies.

When the refrigerant oil 102 with a low viscosity is used to achieve energy saving, the lubricating oil 102 staying between the suction valve seat 141 and the suction valve 120 is reduced, and the seal performance for the suction valve seat 141 and the suction valve 120 which is attained by the lubricating oil 102 is reduced. This causes the refrigerant 103 to flow back. As a result, the efficiency of the compressor is reduced significantly.

To solve this problem, the pressurization step and heating step performed for molding the sintered metal material may be repeated plural times. This can increase the density of the sintered metal material, and reduce the size of the vacancies of the sintered metal material. However, cost increases and the sintered metal material cannot be easily processed. In a case where a cast iron material is used, plural locations are required to be processed and processing cost increases.

In view of the above stated circumstances, in the compressor 100 according to Example 1, the suction valve seat 141 is provided with the surface treatment film 160 including the synthetic resin 161, to seal many vacancies which are unique to the sintered metal material and are present in the suction valve seat 141, with the surface treatment film 160 including the synthetic resin 161. This can reduce the leakage of the refrigerant 103 from the suction valve seat 141. As result, reduction of the efficiency of the compressor 100 can be suppressed.

In addition, in the compressor 100 according to Example 1, since the suction valve seat 141 is provided with the surface treatment film 160 including the synthetic resin 161, the seal performance for the suction valve seat 141 and the suction valve 120 can be improved. Because of this, it becomes possible to suppress the back-flow of the refrigerant 103 during the compression stroke and the discharge stroke.

Therefore, the compressor 100 according to Example 1 is capable of suppressing reduction of a refrigeration capability and increasing the efficiency at low cost.

In the compressor 100 according to Example 1, since the suction valve seat 141 is provided with the surface treatment film 160 including the synthetic resin 161, the surface treatment film 160 is able to elastically reduce a hit force generated when the suction valve 120 closes the suction valve seat 141. Therefore, a hit noise can be reduced, and the compressor with a low noise can be realized.

Since the hit force generated when the suction valve 120 closes the suction valve seat 141 can be reduced, damages to the suction valve 120 such as break or crack can be lessened. As a result, the performance of the compressor 100 can be maintained for a long period of time.

In the compressor 100 according to Example 1, since the surface treatment film 160 includes the solid lubricant 162 with a lipophilic property, the lubricating oil 102 with a sufficient amount can stay between the suction valve seat 141 (to be precise, the surface treatment film 160 provided on the outer surface of the suction valve seat 141) and the suction valve 120. This can improve the seal performance for the suction valve seat 141 and the suction valve 120, and hence suppress the back-flow of the refrigerant 103 during the compression stroke and the discharge stroke.

In the compressor 100 according to Example 1, since the surface treatment film 160 includes the solid lubricant 162, a shear force generated when the suction valve 120 closes the suction valve seat 141 can be reduced because of the lubrication of the solid lubricant 162. This can suppress separation between the surface (outer surface) of the suction valve seat 141 and the inner surface of the surface treatment film 160. As a result, it becomes possible to realize the compressor 100 with a high durability which can withstand long-time use.

When the surface treatment film 160 is caused to adhere onto the suction valve seat 141, the outer surface of the surface treatment film 160 has minute concave-convex portions. However, in the compressor 100 according to Example 1, the surface treatment film 160 includes the solid lubricant 162. The solid lubricant 162 is higher in strength than the synthetic resin 161. Therefore, when the compressor 100 is operated, the concave-convex portions formed on the outer surface of the surface treatment film 160 vanish at an earlier time, so that the outer surface of the surface treatment film 160 can be made smooth. Therefore, the seal performance for the suction valve seat 141 and the suction valve 120 can be improved.

In the compressor 100 according to Example 1, by setting the thickness of the surface treatment film 160 to 1µm or larger, the surface treatment film 160 can be formed on the suction valve seat 141 uniformly. Also, by setting the thickness of the surface treatment film 160 to 20µm or smaller, the internal strength of the surface treatment film 160 and the adhesion strength of the surface treatment film 160 with a base member interface can be ensured, and the rough state of the surface treatment film 160 can be lessened while ensuring a durability.

In the manufacturing method of the compressor 100 according to Example 1, the surface treatment agent is applied to only regions which require the application of the surface treatment agent, by using the suitable masking jig, the pneumatic syringe dispenser device, etc.. Because of this, the surface treatment agent to be used can be reduced in amount. In this way, the compressor 100 with a high productivity and low cost can be realized.

### (Example 2)

A contact member according to Example 2 comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

In the contact member according to Example 2, the solid lubricant may comprise at least one compound selected from a compound group consisting of molybdenum disulfide, graphite, polytetrafluoroethylene resin, and antimony trioxide.

In the contact member according to Example 2, the solid lubricant of the coating layer located at the innermost side may be smaller in average particle (grain) diameter than the solid lubricant of the coating layer located at the outermost side. As defined herein, the content percentage of the solid lubricant in the coating layer refers to a ratio of the volume of the solid lubricant with respect to the unit volume of the coating layer (volume percentage; vol/vol).

In the contact member according to Example 2, the solid lubricant of the coating layer located at the innermost side may be smaller in weight than the solid lubricant of the coating layer located at the outermost side.

A contact member according to Example 2 comprises a surface treatment film including two or more coating layers stacked together, in at least a portion of a contact surface thereof, each of the coating layers includes synthetic resin, and the coating layer located at the innermost side is larger in elastic deformation amount than the coating layer located at the outermost side.

In the contact member according to Example 2, the thickness of the surface treatment film may be set to 1 to 30µm.

In the contact member according to Example 2, the synthetic resin may comprise at least one resin selected from a resin group consisting of polyamide resin, epoxy resin, and phenol resin.

A compressor according to Example 2 comprises a cylinder which accommodates a reciprocatable piston therein; a valve plate placed at an opening end of the cylinder and includes a suction hole, a suction valve seat provided to surround the suction hole, a discharge hole, and a discharge valve seat provided to surround the discharge hole, a suction valve which opens and closes the suction hole, and a discharge valve which opens and closes the discharge hole, wherein at least one of the suction valve seat, the discharge valve seat, the suction valve, and the discharge valve comprises the above contact member.

A manufacturing method of a compressor according to Example 2 comprises (A) applying a first surface treatment agent including synthetic resin and a solid lubricant to at least a portion of a contact surface thereof to form a first coating layer; and (B) applying onto the first coating layer a second surface treatment agent including a solid lubricant with a larger average particle diameter than that of the solid lubricant of the first surface treatment agent to form a second coating layer.

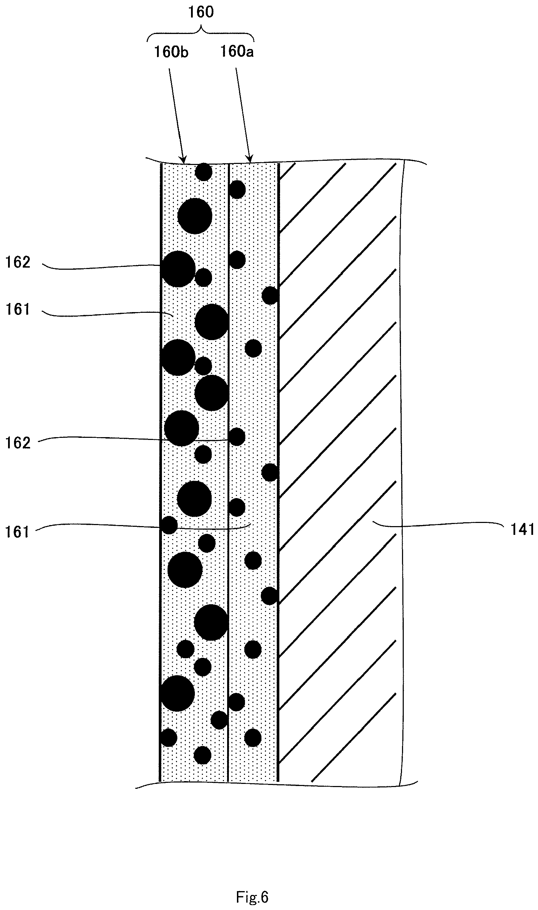

Now, as an exemplary contact member according to Example 2, a case where the contact member is the suction valve seat will be described with reference to Fig. 6. The configuration of the compressor according to Example 2 is the same as that of the compressor according to Example 1, and therefore will not be described in detail repeatedly.

### [Configuration of compressor (contact member)]

Fig. 6 is a cross-sectional view of the suction valve seat (contact member) of the compressor according to Example 2.

As shown in Fig. 6, the configuration of the surface treatment film 160 provided on the suction valve seat (contact member) of the compressor 100 according to Example 2 is basically the same as that of the surface treatment film 160 of the compressor 100 according to Example 1, except that the surface treatment film 160 has a two-layer structure including a first coating layer 160a and a second coating layer 160b.

Specifically, the first coating layer 160a is located at the outer surface side of the suction valve seat 141 (innermost side), while the second coating layer 160b is located outward relative to the first coating layer 160a (outermost side). In Example 2, the first coating layer 160a and the second coating layer 160b are formed on the outer surface of the suction valve seat 141 so as to conform in shape to the outer surface of the suction valve seat 141.

The first coating layer 160a includes the synthetic resin 161 comprising polyamide-imide (PAI) as the binder, and the solid lubricant 162 which has an average particle diameter of 1µm or smaller and is dispersed substantially uniformly in the synthetic resin 161 such that the solid lubricant 162 in the first coating layer 160a has a content percentage which is smaller than 33%. As in the first coating layer 160a, the second coating layer 160b includes the synthetic resin 161 comprising polyamide-imide (PAI) as the binder, and the solid lubricant 162 which has an average particle diameter of 3µm or larger and 5µm or smaller and is dispersed substantially uniformly in the synthetic resin 161 such that the solid lubricant 162 in the second coating layer 160b has a content percentage which is equal to or larger than 33%.

Since the solid lubricant 162 is higher in mechanical strength than the synthetic resin 161, the elastic deformation amount of the first coating layer 160a can be made larger than that of the second coating layer 160b by setting the content percentage of the solid lubricant 162 in the first coating layer 160a lower than that of the solid lubricant 162 in the second coating layer 160b.

Or, the content percentage of the solid lubricant 162 in the first coating layer 160a may be made lower than that of the solid lubricant 162 in the second coating layer 160b by setting the quantity (weight) of the solid lubricant 162 in the first coating layer 160a smaller than that of the solid lubricant 162 in the second coating layer 160b, under the condition in which the average particle diameter of the synthetic resin 161 is set equal.

Or, the elastic deformation amount of the first coating layer 160a may be be made larger than that of the second coating layer 160b by changing the kind and/or content percentage of the synthetic resin 161 included in the coating layers. In this case, the coating layer may not include the solid lubricant 162. For example, the first coating layer 160a may comprise the phenol resin having a relatively soft property to increase the elastic deformation amount, while the second coating layer 160b may comprise polyamide resin having a relatively hard property to reduce the elastic deformation amount.

To maintain the performance of the compressor 100 for a long period of time, the content percentage of the solid lubricant 162 in the first coating layer 160a may be equal to or larger than 1% and smaller than33%.

As shown in Fig. 6, the surface treatment film 160 is configured such that the thickness of the first coating layer 160a is smaller than the thickness of the second coating layer 160b and set to about 10µm in Example 2.

Although in Example 2, the thickness of the first coating layer 160a is set smaller than the thickness of the second coating layer 160b, the present invention is not limited to this. The thickness of the first coating layer 160a may be equal to or larger than that of the second coating layer 160b.

Although in Example 2, the thickness of the surface treatment film 160 is set to about 10µm, the present invention is not limited to this. To improve the seal performance, the thickness of the surface treatment film 160 may be equal to or larger than 1µm, while to manufacture the surface treatment film 160 efficiently, the thickness of the surface treatment film 160 may be equal to or smaller than 30µm. To mitigate an impact force applied to the surface treatment film 160 and to manufacture the surface treatment film 160 efficiently, the thickness of the surface treatment film 160 may be equal to or larger than 5µm and equal to or smaller than 20µm.

### [Manufacturing method of surface treatment film]

Next, the manufacturing method of the surface treatment film 160 according to the present invention will be described.

Initially, preliminary heating is conducted to increase the temperature of the valve plate 117 up to a predetermined temperature (only a region which is in the vicinity of the suction valve seat 141 may be heated in this heating). This is intended to vaporize an organic solvent dissolving (solving) in the surface treatment film 160 applied to the suction valve seat 141 so that the surface treatment film 160 is applied uniformly to the suction valve seat 141.

Then, prepared is a first surface treatment agent for the first coating layer 160a with a specified viscosity and a second surface treatment agent for the second coating layer 160b with a specified viscosity, each of which is produced by adjusting a liquid agent including the synthetic resin 161 and the solid lubricant 162 dispersed in the synthetic resin 161 with a diluting agent comprising an organic agent. Then, the first surface treatment agent is applied to the suction valve seat 141 of the valve plate 117 by spraying. To prevent the first surface treatment agent from adhering onto a region which does not require the application of the first surface treatment agent, the valve plate 117 may be attached with a masking jig of a suitable shape, or the first surface treatment agent may be applied to the suction valve seat 141 by using the pneumatic syringe dispenser device.

Thereafter, drying is temporarily conducted for several minutes under a temperature which is slightly higher than the temperature in the preliminary heating, to cure the surface of the first coating layer 160a. Then, the second surface treatment agent is applied to the surface of the first coating layer 160a by spraying.

Then, drying is temporarily conducted for several minutes under a temperature which is slightly higher than the temperature in the preliminary heating. At a stage in which the surface of the second coating layer 160b is cured, i.e., dried so that liquid resin does not adhere to a finger when the finger touches the surface applied with the second coating layer 160b), buffing is conducted a little in order to finely adjust the surface roughness of the surface treatment film 160 (outer surface of the second coating layer 160b). Desirably, the buff used in the buffing is the horse hair buff, rather than the nylon buff containing abrasive grains or the relatively hard steel buff.

Finally, calcining is conducted under a temperature of about 200 degrees C to 250 degrees C for about 30 minutes to 2 hours, to vaporize all of the diluting agent in the surface treatment agent. In this way, the surface treatment film 160 including the two coating layers is allowed to completely adhere to the suction valve seat 141.

### [Advantage of compressor]

Next, the advantage of the compressor 100 according to Example 2 will be described with reference to Fig. 6.

In the compressor 100 according to Example 2, the first coating layer 160a including the solid lubricant 162 with a smaller average particle diameter is placed in a location that is closer to the suction valve seat 141 (base member), while the second coating layer 160b including the solid lubricant 162 with a larger average particle diameter is placed in a location that is closer to the suction valve 120.

In this configuration, the synthetic resin 161 of the second coating layer 160b abrades away, and thereby the solid lubricant 162 is exposed on the outer surface of the surface treatment film 160 (second coating layer 160b) at an earlier time. This allows the solid lubricant 162 with a high stiffness to mitigate the impact force effectively. In addition, since the first coating layer 160a is elastically deformed to mitigate the impact force effectively, a contact surface pressure can be mitigated significantly.

Because of the above, the compressor 100 according to Example 2 is able to mitigate the impact force more effectively than the compressor 100 according to Example 1. Since the compressor 100 according to Example 2 is able to mitigate the impact force more effectively, it becomes possible to more effectively lessen a noise generated when the suction valve 120 and the suction valve seat 141 collide with each other and more effectively reduce a noise, than the compressor 100 according to Example 1. Moreover, since the compressor 100 according to Example 2 is able to mitigate the impact force more effectively, damages to the suction valve 120 such as break or crack can be lessened, and the performance of the compressor 100 can be maintained for a longer period of time, as compared to the compressor 100 according to Example 1.

Since the solid lubricant 162 is exposed on the outer surface of the surface treatment film 160 (second coating layer 160b) at an earlier time, the concave-convex portions formed on the outer surface of the surface treatment film 160 vanish at an earlier stage, so that the outer surface of the surface treatment film 160 can be made smooth. Therefore, the seal performance for the suction valve seat 141 and the suction valve 120 can be improved.

Since the solid lubricant 162 with a lipophilic property is exposed on the outer surface of the surface treatment film 160 (second coating layer 160b) at an earlier time, the lubricating oil 102 with a sufficient amount can stay between the suction valve seat 141 and the suction valve 120. This can improve the seal performance for the suction valve seat 141 and the suction valve 120, and hence suppress the back-flow of the refrigerant 103 during the compression stroke and the discharge stroke.

Since the solid lubricant 162 included in the first coating layer 160a has a smaller average particle diameter, it has a sufficient adhesion force (binder performance) with respect to the suction valve seat 141. This makes it possible to suppress separation between the surface treatment film 160 (first coating layer 160a) and the suction valve seat 141, and separation between the first coating layer 160a and the second coating layer 160b. Therefore, the compressor 100 according to Example 2 is allowed to have a durability for a longer period of time than the compressor 100 according to Example 1.

In the compressor 100 according to Example 2, the first coating layer 160a including the solid lubricant 162 with a smaller average particle diameter is placed in a location that is closer to the suction valve seat 141 (base member). For this reason, the synthetic resin 161 easily flows into many vacancies present in the suction vale seat 141. This can more effectively lessen the leakage of the refrigerant 103 from the suction vale seat 141, and therefore suppress reduction of the efficiency of the compressor 100 more effectively.

### [Modified example 1]

Next, the modified example of the compressor (contact member) according to Example 2 will be described.

In the contact member according to Modified example 1 of Example 2, the solid lubricant of the coating layer located at an inner side, of adjacent coating layers, may be lower in content percentage than the solid lubricant of the coating layer located at an outer side, of the adjacent coating layers.

In the contact member according to Modified example 1 of Example 2, the coating layer located at the inner side, of the adjacent coating layers, may be larger in elastic deformation amount than the coating layer located at the outer side, of the adjacent coating layers.

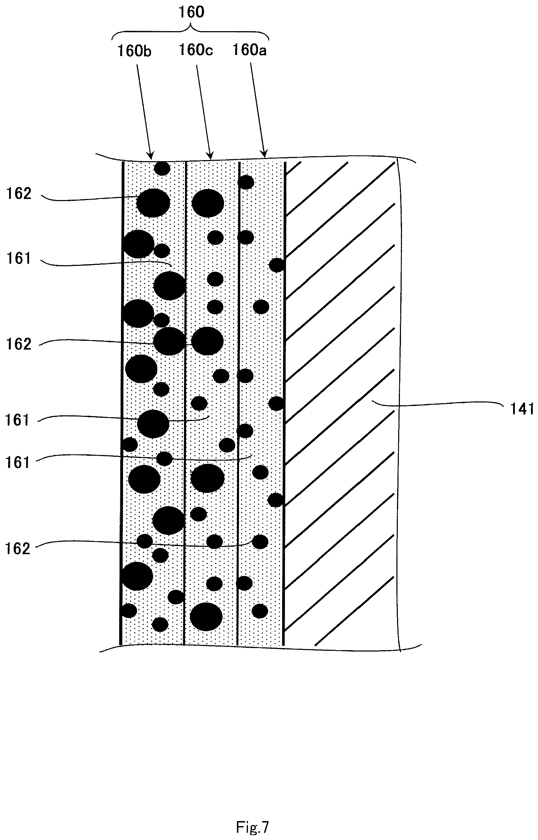

Fig. 7 is a cross-sectional view of the suction valve seat (contact member) of the compressor according to Modified example 1 of Example 2.

As shown in Fig. 7, the configuration of the surface treatment film 160 provided on the suction valve seat (contact member) of the compressor according to Modified example 1 is basically the same as that of the surface treatment film 160 of the compressor 100 according to Example 2, except that the surface treatment film 160 includes three layers which are the first coating layer 160a, the second coating layer 160b, and a third coating layer 160c.

Specifically, the third coating layer 160c is placed between the first coating layer 160a and the second coating layer 160b. The first coating layer 160a and the third coating layer 160c which are adjacent to each other are configured such that the content percentage of the solid lubricant 162 in the first coating layer 160a is lower than the content percentage of the solid lubricant 162 in the third coating layer 160c. Also, the third coating layer 160c and the second coating layer 160b which are adjacent to each other are configured such that the content percentage of the solid lubricant 162 in the third coating layer 160c is lower than the content percentage of the solid lubricant 162 in the second coating layer 160b.

In this configuration, the elastic deformation amount of the first coating layer 160a can be made larger than the elastic deformation amount of the third coating layer 160c. In addition, the elastic deformation amount of the third coating layer 160c can be made larger than the elastic deformation amount of the second coating layer 160b.

The compressor 100 according to Modified example 1 configured as described above can achieve the same advantages as those of the compressor 100 according to Example 2. Although in the compressor 100 according to Modified example 1, the surface treatment film 160 includes the three coating layers, the present invention is not limited to this, so long as the surface treatment film 160 includes a plurality of coating layers. For example, the surface treatment film 160 may include four coating layers, or ten or more coating layers.

### (Example 3)

A compressor according to Example 3 comprises a cylinder which accommodates a reciprocatable piston therein; a valve plate placed at an opening end of the cylinder and includes a discharge valve seat provided to surround a discharge hole; and a discharge valve which opens and closes the discharge hole, wherein at least one of the discharge valve seat and a portion of the discharge valve which portion contacts the discharge valve seat is provided with a surface treatment film including synthetic resin.

Except for the above feature, the compressor according to Example 3 may be configured as in the compressor according to Example 1 or Example 2.

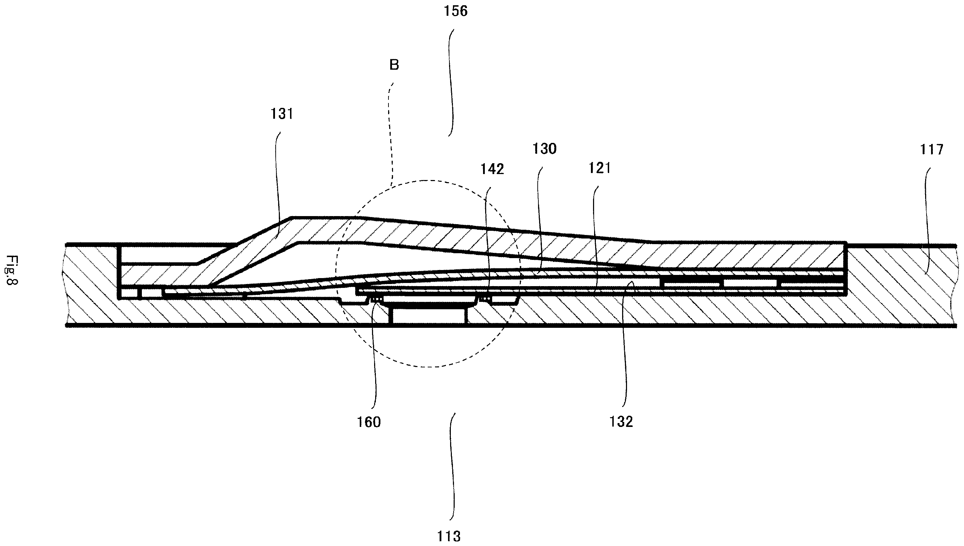

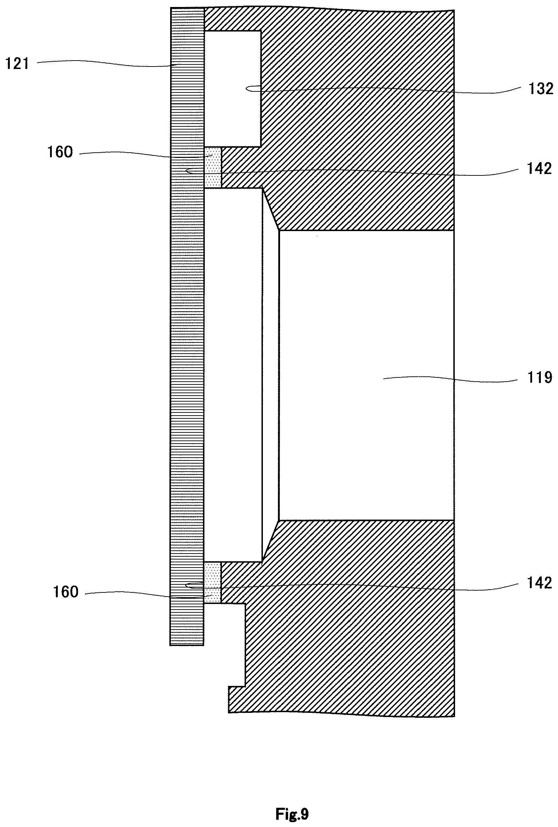

Now, as an exemplary compressor according to Example 3, the compressor comprising the surface treatment film provided on the discharge valve seat will be described with reference to Figs. 8 and 9.

Fig. 8 is a cross-sectional view of the major components of a compressor according to Example 3. Fig. 9 is an enlarged cross-sectional view of B-part of Fig. 8.

As shown in Figs. 8 and 9, the configuration of the compressor 100 according to Example 3 is basically the same as that of the compressor 100 according to Example 1, except that the surface treatment film 160 is provided on the discharge valve seat 142 (to be precise, the surface of the discharge valve seat 142 of the valve plate 117). The configuration and manufacturing method of the surface treatment film 160 are the same as those of the surface treatment film 160 of the compressor 100 according to Example 1, and therefore will not be described in detail repeatedly.

In the compressor 100 according to Example 3 configured as described above, the surface treatment film 160 including the synthetic resin 161 can seal many vacancies which are unique to a sintered metal material and are present in the discharge valve seat 142. Therefore, the leakage of the refrigerant 103 from the discharge valve seat 142 can be reduced. As a result, reduction of the efficiency of the compressor 100 can be suppressed.

In the compressor 100 according to Example 3, since the discharge valve seat 142 is provided with the surface treatment film 160 including the synthetic resin 161, the seal performance for the discharge valve seat 142 and the discharge valve 121 can be improved. As a result, it becomes possible to suppress the back-flow of the refrigerant 103 during the suction stroke.

Therefore, the compressor 100 according to Example 3 can suppress reduction of a refrigeration capability, reduce cost, and increase the efficiency.

In the compressor 100 according to Example 3, since the discharge valve seat 142 is provided with the surface treatment film 160 including the synthetic resin 161, the surface treatment film 160 is able to elastically reduce a hit force generated when the discharge valve 121 closes the discharge valve seat 142. Therefore, a hit noise can be reduced, and the compressor with a low noise can be realized.

Since the hit force generated when the discharge valve 121 closes the discharge valve seat 142 can be reduced, damages to the discharge valve 121 such as break or crack can be lessened. As a result, the performance of the compressor 100 can be maintained for a long period of time.

In the compressor 100 according to Example 3, since the surface treatment film 160 includes the solid lubricant 162 with a lipophilic property, the lubricating oil 102 with a sufficient amount can stay between the discharge valve seat 142 (to be precise, the surface treatment film 160 provided on the surface of the discharge valve seat 142) and the discharge valve 121. This can improve the seal performance for the discharge valve seat 142 and the discharge valve 121, and hence suppress the back-flow of the refrigerant 103 during the compression stroke and the discharge stroke.

In the compressor 100 according to Example 3, since the surface treatment film 160 includes the solid lubricant 162, a shear force generated when the discharge valve 121 closes the discharge valve seat 142 can be reduced because of the lubrication of the solid lubricant 162. This can suppress separation between the surface (outer surface) of the discharge valve seat 142 and the inner surface of the surface treatment film 160. As a result, it becomes possible to realize the compressor 100 with a high durability which can withstand long-time use.

In the compressor 100 according to Example 3, the surface treatment film 160 includes solid lubricant 162. When the compressor 100 is operated, the concave-convex portions formed on the outer surface of the surface treatment film 160 vanish at an earlier time, so that the outer surface of the surface treatment film 160 can be made smooth. Therefore, the seal performance for the discharge valve seat 142 and the discharge valve 121 can be improved.

Although the compressor 100 according to Example 3 is a reciprocating compressor, the present invention is not limited to this, and may be any one of various kinds of compressors such as a rotary compressor or a scroll compressor.

### (Example 4)

A contact member according to Example 4 comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

A contact member according to Example 4 comprises a surface treatment film including two or more coating layers stacked together, in at least a portion of a contact surface thereof, each of the coating layers includes synthetic resin, and the coating layer located at the innermost side is larger in elastic deformation amount than the coating layer located at the outermost side.

A compressor according to Example 4 comprises a cylinder which accommodates a reciprocatable piston therein; a valve plate placed at an opening end of the cylinder and includes a discharge valve seat provided to surround a discharge hole; and a discharge valve which opens and closes the discharge hole, wherein at least one of the discharge valve seat and the discharge valve comprises the above contact member.

Except for the above feature, the compressor according to Example 4 may be configured as in the compressor according to Example 1 or Example 2.

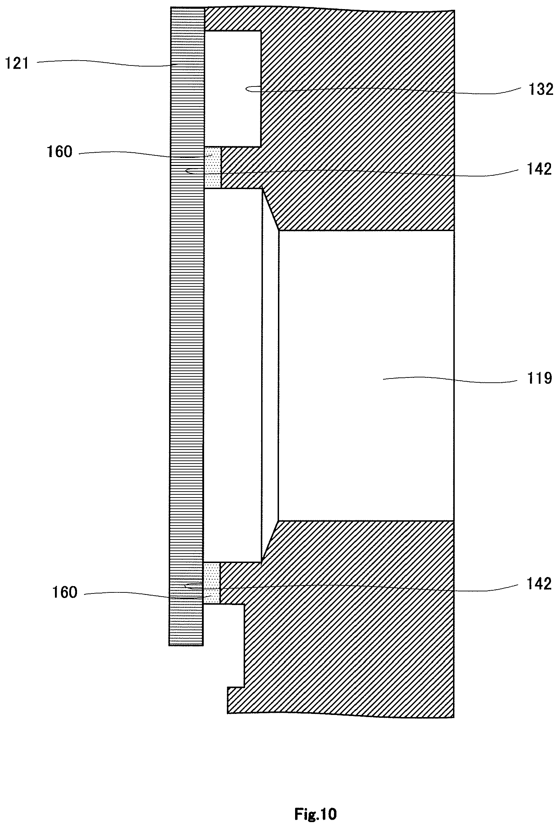

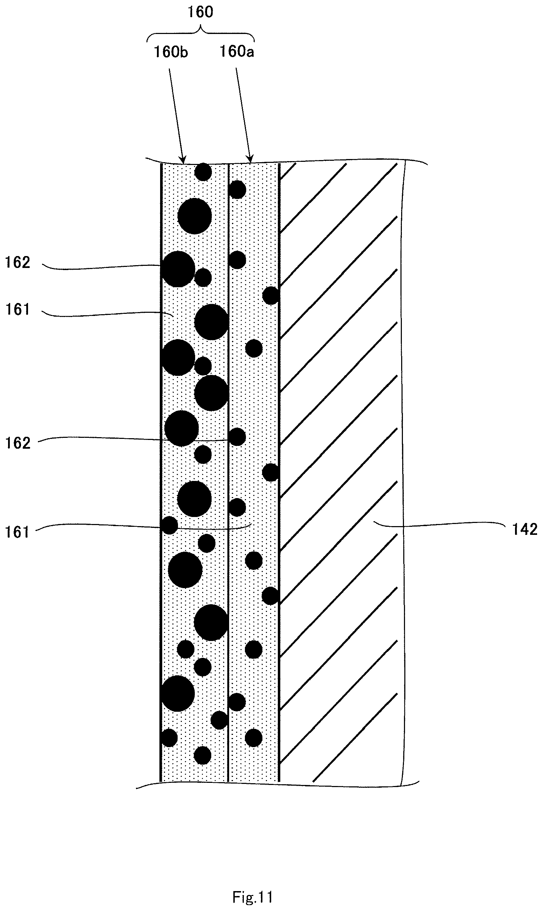

Now, as an exemplary contact member according to Example 4, a case where the contact member is the discharge valve seat will be described with reference to Figs. 10 and 11. The configuration of the compressor 100 according to Example 4 is the same as that of the compressor 100 according to Example 1, except for the configuration of the surface treatment film provided on the discharge valve seat. Therefore, the configuration of the compressor 100 according to Example 4 will not be described in detail repeatedly.

Fig. 10 is a cross-sectional view of the major components of a compressor according to Example 4. Fig. 11 is a cross-sectional view of a discharge valve seat (contact member) of the compressor according to Example 4.

As shown in Figs. 10 and 11, the configuration of the surface treatment film 160 provided on the discharge valve seat (contact member) of the compressor 100 according to Example 4 is basically the same as that of the surface treatment film 160 of the compressor 100 according to Example 3, except that the surface treatment film 160 has a two-layer structure including a first coating layer 160a and a second coating layer 160b. The configuration of the surface treatment film 160 (first coating layer 160a and second coating layer 160b) of Example 4 is the same as that of the surface treatment film 160 (first coating layer 160a and second coating layer 160b) of Example 2, and therefore will not be described in detail repeatedly.

In the compressor 100 according to Example 4 configured as described above, the first coating layer 160a including the solid lubricant 162 with a smaller average particle diameter is placed in a location that is closer to the discharge valve seat 142 (base member), while the second coating layer 160b including the solid lubricant 162 with a larger average particle diameter is placed in a location that is closer to the discharge valve 121.

In this configuration, the synthetic resin 161 of the second coating layer 160b abrades away, and thereby the solid lubricant 162 is exposed on the outer surface of the surface treatment film 160 (second coating layer 160b) at an earlier time. This can mitigate the impact force effectively. In addition, since the first coating layer 160a is elastically deformed to mitigate the impact force effectively, a contact surface pressure can be mitigated significantly.

Because of the above, the compressor 100 according to Example 4 is able to mitigate the impact force more effectively than the compressor 100 according to Example 3. Since the compressor 100 according to Example 4 is able to mitigate the impact force more effectively, it becomes possible to more effectively lessen a noise generated when the discharge valve 121 and the discharge valve seat 142 collide with each other and more effectively reduce a noise, than the compressor 100 according to Example 3. Moreover, since the compressor 100 according to Example 4 is able to mitigate the impact force more effectively, damages to the discharge valve 121 such as break or crack can be lessened, and the performance of the compressor 100 can be maintained for a long period of time, as compared to the compressor 100 according to Example 3.

Since the solid lubricant 162 is exposed on the outer surface of the surface treatment film 160 (second coating layer 160b) at an earlier time, the concave-convex portions provided on the outer surface of the surface treatment film 160 vanish at an earlier time, so that the outer surface of the surface treatment film 160 can be made smooth. Therefore, the seal performance for the discharge valve seat 142 and the discharge valve 121 can be improved.

Since the solid lubricant 162 with a lipophilic property is exposed on the outer surface of the surface treatment film 160 (second coating layer 160b) at an earlier time, the lubricating oil 102 with a sufficient amount can stay between the discharge valve seat 142 and the discharge valve 121. This can improve the seal performance for the discharge valve seat 142 and the discharge valve 121, and hence suppress the back-flow of the refrigerant 103 during the compression stroke and the discharge stroke.

Since the solid lubricant 162 included in the first coating layer 160a has a smaller average particle diameter, it has a sufficient adhesion force (binder performance) with respect to the discharge valve seat 142. This makes it possible to suppress separation between the surface treatment film 160 (first coating layer 160a) and the discharge valve seat 142, and separation between the first coating layer 160a and the second coating layer 160b. Therefore, the compressor 100 according to Example 4 is allowed to have a durability for a longer period of time than the compressor 100 according to Example 3.

In the compressor 100 according to Example 4, the first coating layer 160a including the solid lubricant 162 with a smaller average particle diameter is placed in a location that is closer to the discharge valve seat 142 (base member). For this reason, the synthetic resin 161 easily flows into many vacancies present in the discharge vale seat 142. This can more effectively lessen the leakage of the refrigerant 103 from the discharge vale seat 142, and therefore suppress reduction of the efficiency of the compressor 100 more effectively.

Although in the compressor 100 according to Example 4, the surface treatment film 160 includes the two coating layers, the present invention is not limited to this. For example, the surface treatment film 160 may include three or more coating layers.

### (Example 5)

A compressor according to Example 5 comprises a cylinder which accommodates a reciprocatable piston therein; a valve plate placed at an opening end of the cylinder and includes a suction valve seat provided to surround a suction hole; and a suction valve which opens and closes the suction hole, wherein at least one of the suction valve seat and a portion of the suction valve which portion contacts the suction valve seat is provided with a surface treatment film including synthetic resin.

Except for the above feature, the compressor according to Example 5 may be configured as in the compressor according to any one of Example 1 to Example 4.

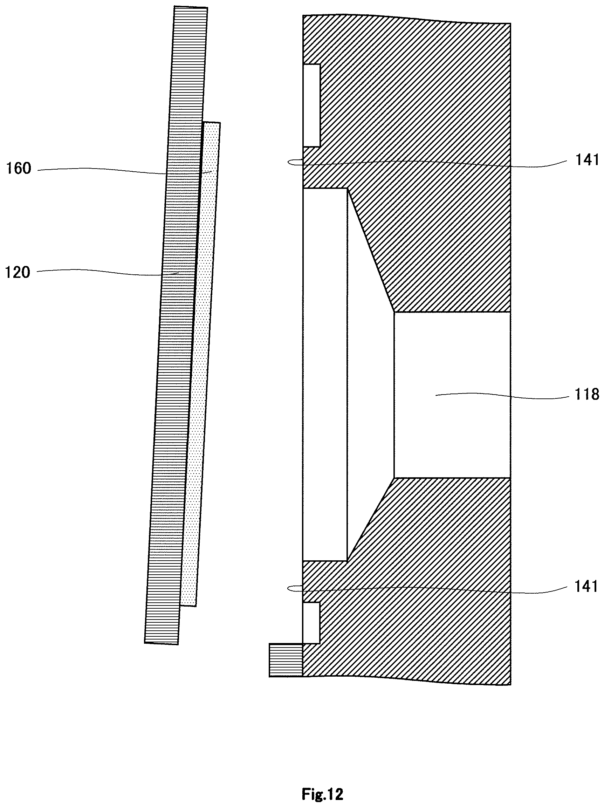

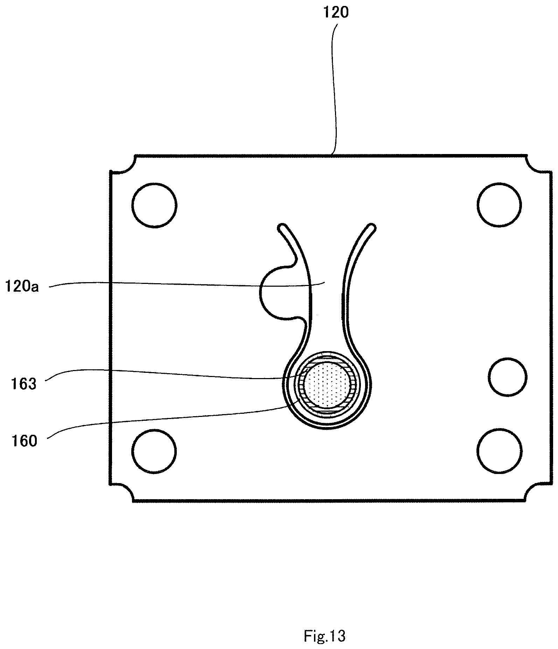

Now, as an exemplary compressor according to Example 5, the compressor comprising the surface treatment film provided on a portion of the suction valve which portion contacts the suction valve seat will be described with reference to Figs. 12 and 13.

Fig. 12 is a cross-sectional view of the major components of the compressor according to Example 5. Fig. 13 is a plan view of the suction valve of Fig. 12. In Fig. 13, the portion of the surface treatment film and the suction valve, which portion contacts the suction valve seat is hatched.

As shown in Figs. 12 and 13, the configuration of the compressor 100 according to Example 5 is basically the same as that of the compressor 100 according to Example 1, except that the surface treatment film 160 is provided on the suction valve 120. Specifically, the surface treatment film 160 includes a ring-shaped contact portion 163 of the suction valve 120 which contacts the suction vale seat 141.

In Example 5, the surface treatment film 160 has a circular shape with a diameter which is larger than the diameter of the outer periphery of the contact portion 163. The configuration and manufacturing method of the surface treatment film 160 are the same as those of the surface treatment film 160 of the compressor 100 according to Example 1, and therefore will not be described in detail repeatedly.

The compressor 100 according to Example 5 configured as described above can achieve the same advantages as those of the compressor 100 according to Example 1.

In addition, in the compressor 100 according to Example 5, the circular surface treatment film 160 is provided on the suction valve 120 of a flat plate shape. Therefore, the surface treatment film 160 can be formed more uniformly and the productivity of the compressor 100 can be made higher than in a case where the surface treatment film 160 is provided on the suction vale seat 141 of a ring shape.

Although in Example 5, the surface treatment film 160 is provided in the vicinity of the contact portion 163 of the suction valve 120, it may be provided on the entire main surface of the suction valve 120. In this case, also, the same advantages can be achieved.

### (Example 6)

A contact member according to Example 6 comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

A contact member according to Example 6 comprises a surface treatment film including two or more coating layers stacked together, in at least a portion of a contact surface thereof, each of the coating layers includes synthetic resin, and the coating layer located at the innermost side is larger in elastic deformation amount than the coating layer located at the outermost side.

A compressor according to Example 6 comprises a cylinder which accommodates a reciprocatable piston therein; a valve plate placed at an opening end of the cylinder and includes a suction hole, a suction valve seat provided to surround the suction hole, a discharge hole, and a discharge valve seat provided to surround the discharge hole, a suction valve which opens and closes the suction hole, and a discharge valve which opens and closes the discharge hole, wherein at least one of the suction valve seat, the discharge valve seat, the suction valve, and the discharge valve comprises the contact member.

Except for the above feature, the compressor according to Example 6 may be configured as in the compressor according to any one of Example 1 or Example 4.

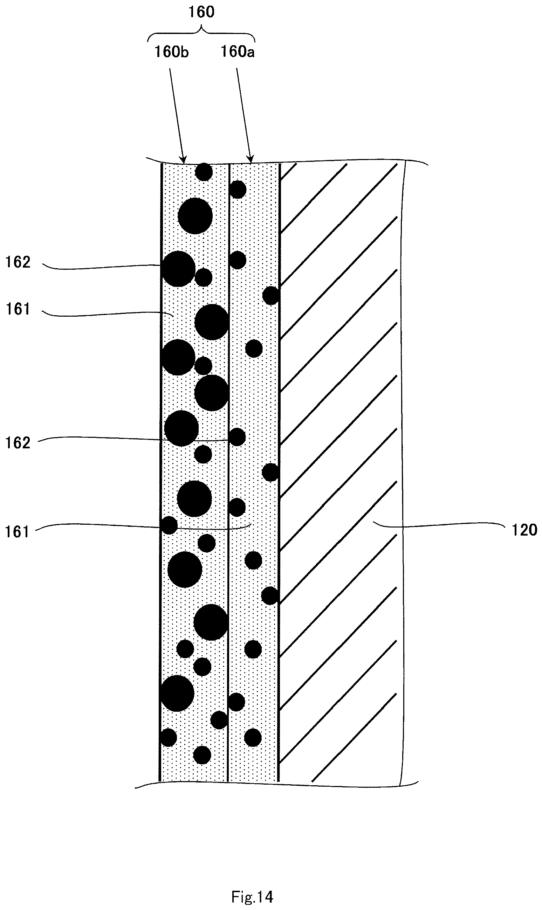

Now, as an exemplary contact member according to Example 6, a case where the contact member is the suction valve will be described with reference to Fig. 14. The configuration of the compressor 100 according to Example 6 is the same as that of the compressor 100 according to Example 1, except for the configuration of the surface treatment film provided on the suction valve. Therefore, the configuration of the compressor 100 according to Example 6 will not be described in detail repeatedly.

Fig. 14 is a cross-sectional view of a suction valve (contact member) of a compressor according to Example 6.

As shown in Fig. 14, the configuration of the surface treatment film 160 provided on the suction valve (contact member) of the compressor 100 according to Example 6 is basically the same as that of the surface treatment film 160 of the compressor 100 according to Example 5, except that the surface treatment film 160 has a two-layer structure including a first coating layer 160a and a second coating layer 160b. The configuration of the surface treatment film 160 (first coating layer 160a and second coating layer 160b) of Example 6 is the same as that of the surface treatment film 160 (first coating layer 160a and second coating layer 160b) of Example 2, and therefore will not be described in detail repeatedly.

The compressor 100 according to Example 6 configured as described above can achieve the same advantages as those of the compressor 100 according to Example 2. Although in the compressor 100 according to Example 6, the surface treatment film 160 includes the two coating layers, the present invention is not limited to this. For example, the surface treatment film 160 may include three or more coating layers.

### (Example 7)

A compressor according to Example 7 comprises a cylinder which accommodates a reciprocatable piston therein; a valve plate placed at an opening end of the cylinder and includes a discharge valve seat provided to surround a discharge hole; and a discharge valve which opens and closes the discharge hole, wherein at least one of the discharge valve seat and a portion of the discharge valve which portion contacts the discharge valve seat is provided with a surface treatment film including synthetic resin.

Except for the above feature, the compressor according to Example 7 may be configured as in the compressor according to any one of Example 1 to Example 6.

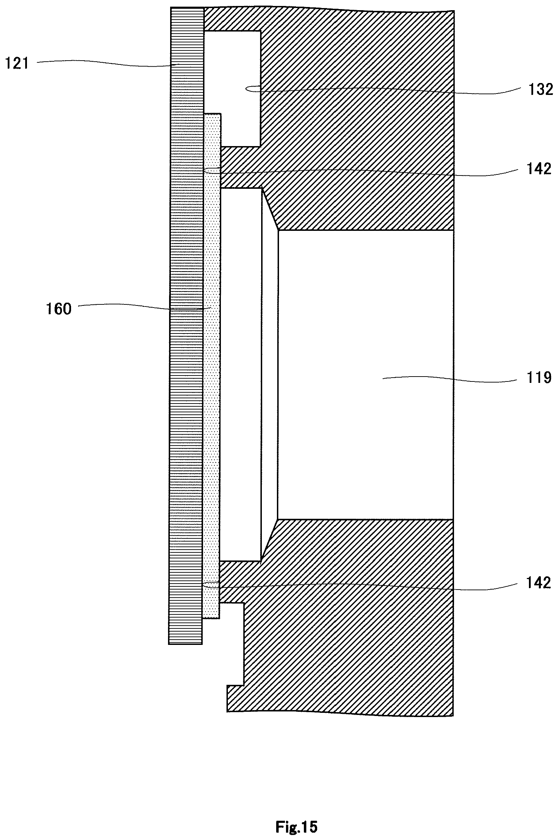

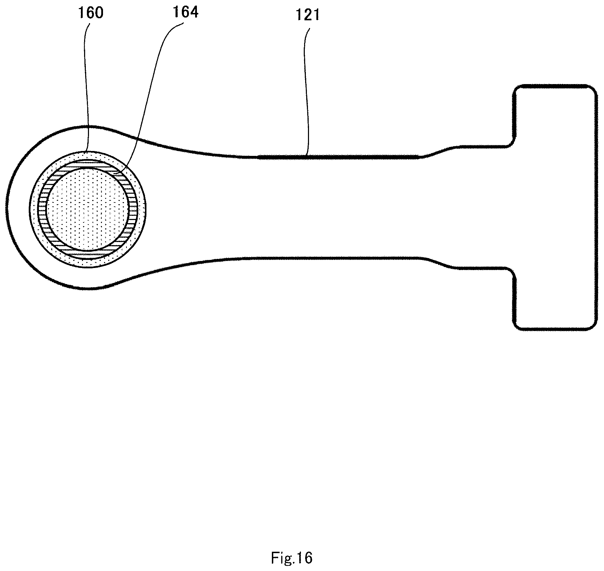

Now, as an exemplary compressor according to Example 7, the compressor comprising the surface treatment film provided on the portion of the discharge valve which contacts the discharge valve seat will be described with reference to Figs. 15 and 16.

Fig. 15 is a cross-sectional view of the major components of the compressor according to Example 7. Fig. 16 is a plan view of the discharge valve of Fig. 15.
In Fig. 16, the portion of the surface treatment film and the discharge valve, which portion contacts the discharge valve seat is hatched.

As shown in Figs. 15 and 16, the configuration of the compressor 100 according to Example 7 is basically the same as that of the compressor 100 according to Example 1, except that the surface treatment film 160 is provided on the discharge valve 121. Specifically, the surface treatment film 160 includes a ring-shaped contact portion 164 of the discharge valve 121 which portion contacts the discharge vale seat 142.

In Example 7, the surface treatment film 160 has a circular shape with a diameter which is larger than that of the outer periphery of the contact portion 164. The configuration and manufacturing method of the surface treatment film 160 of the present example are the same as those of the surface treatment film 160 of the compressor 100 according to Example 1, and therefore will not be described in detail repeatedly.

The compressor 100 according to Example 7 configured as described above can achieve the same advantages as those of the compressor 100 according to Example 3.

In addition, in the compressor 100 according to Example 7, the circular surface treatment film 160 is provided on the discharge valve 121 of a flat plate shape. Therefore, the surface treatment film 160 can be formed more uniformly and the productivity of the compressor 100 can be made higher than in a case where the surface treatment film 160 is provided on the discharge vale seat 142 of a ring shape.

Although in Example 7, the surface treatment film 160 is provided in the vicinity of the contact portion 163 of the discharge valve 121, it may be provided on the entire main surface of the discharge valve 121.

### (Example 8)

A contact member according to Example 8 comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

A contact member according to Example 8 comprises a surface treatment film including two or more coating layers stacked together, in at least a portion of a contact surface thereof, each of the coating layers includes synthetic resin, and the coating layer located at the innermost side is larger in elastic deformation amount than the coating layer located at the outermost side.

A compressor according to Example 8 comprises a cylinder which accommodates a reciprocatable piston therein; a valve plate placed at an opening end of the cylinder and includes a suction hole, a suction valve seat provided to surround the suction hole, a discharge hole, and a discharge valve seat provided to surround the discharge hole, a suction valve which opens and closes the suction hole, and a discharge valve which opens and closes the discharge hole, wherein at least one of the suction valve seat, the discharge valve seat, the suction valve, and the discharge valve comprises the above contact member.

Except for the above feature, the compressor according to Example 8 may be configured as in the compressor according to any one of Example 1 to Example 6.

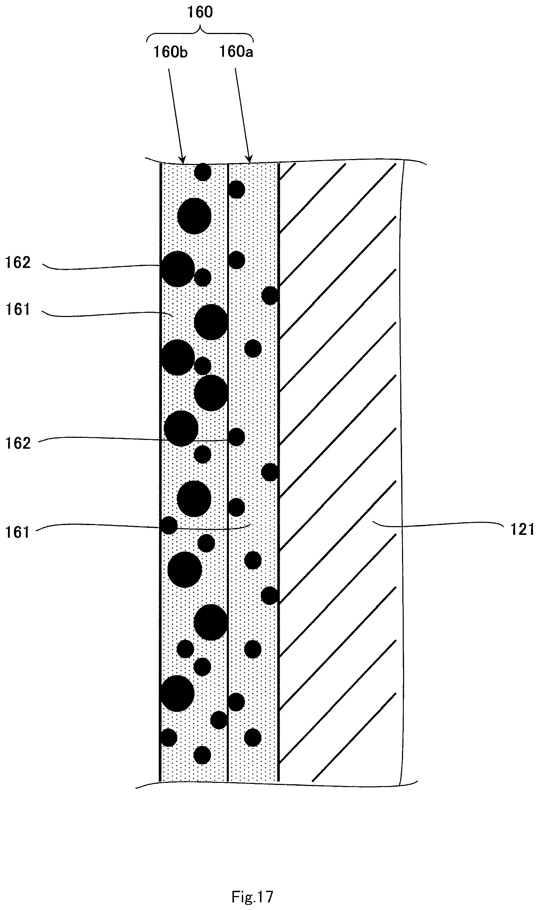

Now, as an exemplary contact member according to Example 8, a case where the contact member is the discharge valve will be described with reference to Fig. 17. The configuration of the compressor 100 according to Example 8 is the same as that of the compressor 100 according to Example 1, except for the configuration of the surface treatment film provided on the suction valve, and therefore will not be described in detail repeatedly.

Fig. 17 is a cross-sectional view of the discharge valve (contact member) of the compressor according to Example 8.

As shown in Fig. 17, the configuration of the surface treatment film 160 provided on the discharge valve 121 of the compressor 100 according to Example 8 is basically the same as that of the surface treatment film 160 of the compressor 100 according to Example 7, except that the surface treatment film 160 has a two-layer structure including a first coating layer 160a and a second coating layer 160b. The configuration of the surface treatment film 160 (first coating layer 160a and second coating layer 160b) of Example 8 is the same as that of the surface treatment film 160 (first coating layer 160a and second coating layer 160b) of Example 2, and therefore will not be described in detail repeatedly.

The compressor 100 according to Example 8 configured as described above can achieve the same advantages as those of the compressor 100 according to Example 4. Although in the compressor 100 according to Example 8, the surface treatment film 160 includes the two coating layers, the present invention is not limited to this. For example, the surface treatment film 160 may include three or more coating layers.

### (Example 9)

A contact member according to Example 9 comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

A contact member according to Example 9 comprises a surface treatment film including two or more coating layers stacked together, in at least a portion of a contact surface thereof, each of the coating layers includes synthetic resin, and the coating layer located at the innermost side is larger in elastic deformation amount than the coating layer located at the outermost side.

A compressor according to Example 9 comprises a cylinder which accommodates a reciprocatable piston therein; a valve plate placed at an opening end of the cylinder and includes a suction hole, a suction valve seat provided to surround the suction hole, a discharge hole, and a discharge valve seat provided to surround the discharge hole, a suction valve which opens and closes the suction hole, and a discharge valve which opens and closes the discharge hole, wherein each of the suction valve seat and the suction valve comprises the above contact member.

A compressor according to Example 9 comprises a cylinder which accommodates a reciprocatable piston therein; a valve plate placed at an opening end of the cylinder and includes a suction hole, a suction valve seat provided to surround the suction hole, a discharge hole, and a discharge valve seat provided to surround the discharge hole, a suction valve which opens and closes the suction hole, and a discharge valve which opens and closes the discharge hole, wherein each of the suction valve seat and the suction valve is provided with a surface treatment film including synthetic resin.

Except for the above feature, the compressor according to Example 9 may be configured as in the compressor according to any one of Example 1 to Example 8.

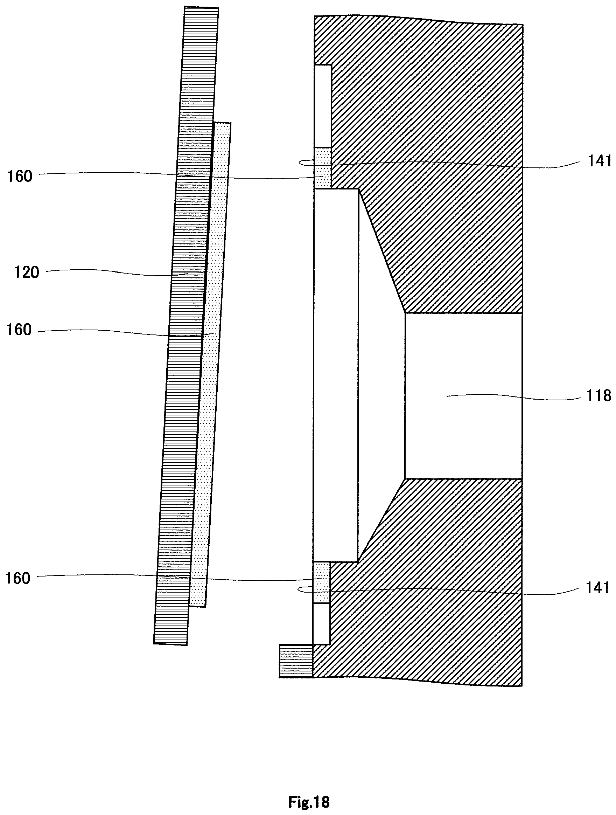

Now, as an exemplary contact member according to Example 9, a case where the contact member is the suction valve seat and the suction valve will be described with reference to Fig. 18. The configuration of the compressor 100 according to Example 9 is the same as that of the compressor 100 according to Example 1, except for the configuration of the surface treatment film provided on the suction valve, and therefore will not be described in detail repeatedly.

Fig. 18 is a cross-sectional view of the major components of the compressor according to Example 9.

As shown in Fig. 18, the configuration of the compressor 100 according to Example 9 is basically the same as that of the compressor 100 according to Example 1, except that the surface treatment film 160 is provided on each of the suction valve seat 141 and the suction valve 120.

The surface treatment film 160 provided on the suction valve seat 141 may include a single coating layer as in the surface treatment film 160 of Example 1, or a plurality of coating layers as in the surface treatment film 160 of Example 2 (including Modified example 1). In the same manner, the surface treatment film 160 provided on the suction valve 120 may include a single coating layer as in the surface treatment film 160 of Example 5, or a plurality of coating layers as in the surface treatment film 160 of Example 6.

When the surface treatment film 160 provided on each of the suction valve seat 141 and the suction valve 120 includes a single coating layer, the solid lubricant 162 included in the surface treatment film 160 provided on one of the suction valve seat 141 and the suction valve 120 may be lower in content percentage than the solid lubricant 162 included in the surface treatment film 160 provided on the other of the suction valve seat 141 and the suction valve 120.

The compressor 100 according to Example 9 configured as described above can achieve the same advantages as those of the compressor 100 according to Example 1, 2, 5 or 6.

### (Example 10)

A contact member according to Example 10 comprises a surface treatment film including two or more coating layers stacked together, in at least a portion of a contact surface thereof, each of the coating layers includes synthetic resin and a solid lubricant, and the solid lubricant of the coating layer located at an innermost side is lower in content percentage than the solid lubricant of the coating layer located at an outermost side.

A contact member according to Example 10 comprises a surface treatment film including two or more coating layers stacked together, in at least a portion of a contact surface thereof, each of the coating layers includes synthetic resin, and the coating layer located at the innermost side is larger in elastic deformation amount than the coating layer located at the outermost side.

A compressor according to Example 10 comprises a cylinder which accommodates a reciprocatable piston therein; a valve plate placed at an opening end of the cylinder and includes a suction hole, a suction valve seat provided to surround the suction hole, a discharge hole, and a discharge valve seat provided to surround the discharge hole, a suction valve which opens and closes the suction hole, and a discharge valve which opens and closes the discharge hole, wherein each of the discharge valve seat and the discharge valve comprises the above contact member.

A compressor according to Example 10 comprises a cylinder which accommodates a reciprocatable piston therein; a valve plate placed at an opening end of the cylinder and includes a discharge valve seat provided to surround a discharge hole, and a discharge valve which opens and closes the discharge hole, wherein each of the discharge valve seat and the discharge valve is provided with a surface treatment film including synthetic resin.

Except for the above feature, the compressor according to Example 10 may be configured as in the compressor according to any one of Example 1 to Example 9.

Now, as an exemplary contact member according to Example 10, a case where the contact member is the discharge valve seat and the discharge valve will be described with reference to Fig. 20. The configuration of the compressor 100 according to Example 10 is the same as that of the compressor 100 according to Example 1, except for the configuration of the surface treatment film provided on the discharge valve seat and the discharge valve, and therefore will not be described in detail repeatedly.

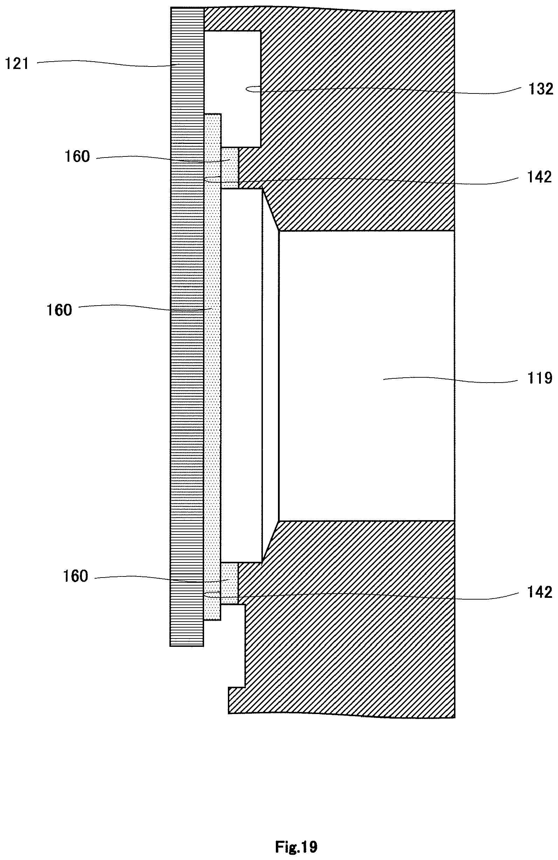

Fig. 19 is a cross-sectional view of the major components of the compressor according to Example 10.

As shown in Fig. 19, the configuration of the compressor 100 according to Example 10 is basically the same as that of the compressor 100 according to Example 1, except that the surface treatment film 160 is provided on each of the discharge valve seat 142 and the discharge valve 121.

The surface treatment film 160 provided on the discharge valve seat 142 may include a single coating layer as in the surface treatment film 160 of Example 3, or a plurality of coating layers as in the surface treatment film 160 of Example 4. In the same manner, the surface treatment film 160 provided on the discharge valve 121 may include a single coating layer as in the surface treatment film 160 of Example 7, or a plurality of coating layers as in the surface treatment film 160 of Example 8.

When the surface treatment film 160 provided on each of the discharge valve seat 142 and the discharge valve 121 includes a single coating layer, the solid lubricant 162 included in the surface treatment film 160 provided on one of the discharge valve seat 142 and the discharge valve 121 may be lower in content percentage than the solid lubricant 162 included in the surface treatment film 160 provided on the other of the discharge valve seat 142 and the discharge valve 121.

The compressor 100 according to Example 10 configured as described above can achieve the same advantages as those of the compressor 100 according to Example 3, 4, 7 or 8.

### (Example 11)

A slide member according to Example 11 comprises a surface treatment film including two or more coating layers stacked together, in at least a portion of a slide surface thereof, each of the coating layers includes synthetic resin and a solid lubricant, and the solid lubricant of the coating layer located at an innermost side is lower in content percentage than the solid lubricant of the coating layer located at an outermost side.

In the slide member according to Example 11, the solid lubricant may comprise at least one compound selected from a compound group consisting of molybdenum disulfide, graphite, polytetrafluoroethylene resin, and antimony trioxide.

In the slide member according to Example 11, the solid lubricant of the coating layer located at the innermost side may be smaller in average particle diameter than the solid lubricant of the coating layer located at the outermost side.

In the contact member according to Example 11, the solid lubricant of the coating layer located at the innermost side may be smaller in weight than the solid lubricant of the coating layer located at the outermost side.

A slide member according to Example 11 comprises a surface treatment film including two or more coating layers stacked together, in at least a portion of a slide surface thereof, each of the coating layers includes synthetic resin, and the coating layer located at an innermost side is larger in elastic deformation amount than the coating layer located at an outermost side.

In the slide member according to Example 11, the surface treatment film may have a thickness of 1 to 10µm.

In the slide member according to Example 11, the synthetic resin may comprise at least one resin selected from a resin group consisting of polyamide resin, epoxy resin, and phenol resin.

A compressor according to Example 11 comprises an electric component including a stator and a rotor; a compression component activated by the electric component; and a sealed container in which the electric component and the compression component are accommodated and lubricating oil is stored, wherein the compression component includes a crankshaft including a main shaft and an eccentric shaft; a main bearing supporting the crankshaft such that the crankshaft is rotatable; a cylinder block defining a cylinder; a piston which is reciprocatable inside the cylinder; a piston pin mounted to the piston such that a center axis of the piston pin is parallel to the eccentric shaft; and a connecting rod connecting the eccentric shaft and the piston pin to each other, wherein at least one of members constituting the compression component comprises the above slide member.

A manufacturing method of a compressor according to the present invention comprises (A) applying a first surface treatment agent including synthetic resin and a solid lubricant to at least a portion of a slide surface to form a first coating layer; and (B) applying onto the first coating layer a second surface treatment agent including a solid lubricant with a larger average particle diameter than that of the solid lubricant of the first surface treatment agent to form a second coating layer.

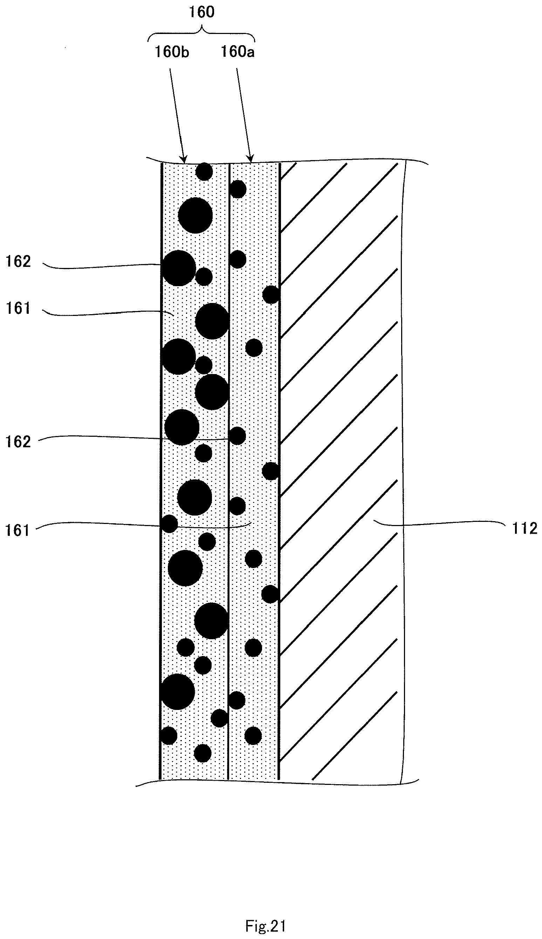

Now, as an exemplary slide member according to Example 11, a case where the slide member is the main shaft of the crankshaft will be described with reference to Figs. 20 and 21. The configuration of the compressor according to Example 11 is the same as that of the compressor according to any one of Example 1 to Example 10.

### [Configuration of compressor]

Fig. 20 is a vertical sectional view of the compressor according to Example 11. Fig. 21 is an enlarged cross-sectional view of C-part of Fig. 20.

As shown in Figs. 20 and 21, the configuration of the compressor 100 according to Example 11 is basically the same as that of the compressor 100 according to Example 1 except that the surface treatment film 160 is provided on the main shaft 111.

Specifically, the main shaft 111 includes a first slide section 180 located at an upper side, a second slide section 182 located at a lower side, and a connecting section 181 located between the first slide section 180 and the second slide section 182. The first slide section 180 and the second slide section 182 are configured to contact a bearing section 123 to so as to form a slide surface, and the surface treatment film 160 is provided on the surface of the first slide section 180 and the surface of the second slide section 182.

The thickness of the surface treatment film 160 may be equal to or larger than 1µm to improve a sliding capability, or may be equal to or smaller than 10µm to efficiently manufacture the surface treatment film 160. Or, the thickness of the surface treatment film 160 may be equal to or larger than 3µm and may be equal to or smaller than 6µm to improve a sliding capability and efficiently manufacture the surface treatment film 160.

The configuration of the surface treatment film 160 according to Example 11 is the same as that of the surface treatment film 160 according to Example 2, and therefore will not be described in detail repeatedly.

Since the outer diameter of the connecting section 181 is set smaller than that of the diameter of the first slide section 180 and the diameter of the second slide section 182, it does not slide with the bearing section 123. For this reason, in Example 11, the connecting section 181 is not provided with the surface treatment film 160.

The material of the base member of the crankshaft 112 is ferrum casting ductile (FCD), while the material of the block 115 including the bearing section 123 is gray cast iron (FC). In Example 11, the surface treatment film 160 is not provided on the slide surface (inner peripheral surface) of the bearing section 123.

By using the compressor 100 according to Example 11 configured as described above, a reliability test was conducted under conditions including a mode in which it was assumed that the main shaft 111 was sliding in contact with local regions of the upper end portion and lower end portion of the bearing section 123, i.e., in a partial contact state. As a result, the compressor 100 according to Example 11 had a good abrasion characteristic as compared to the conventional compressor. The present inventors estimated that such a result was obtained for the reasons described below.

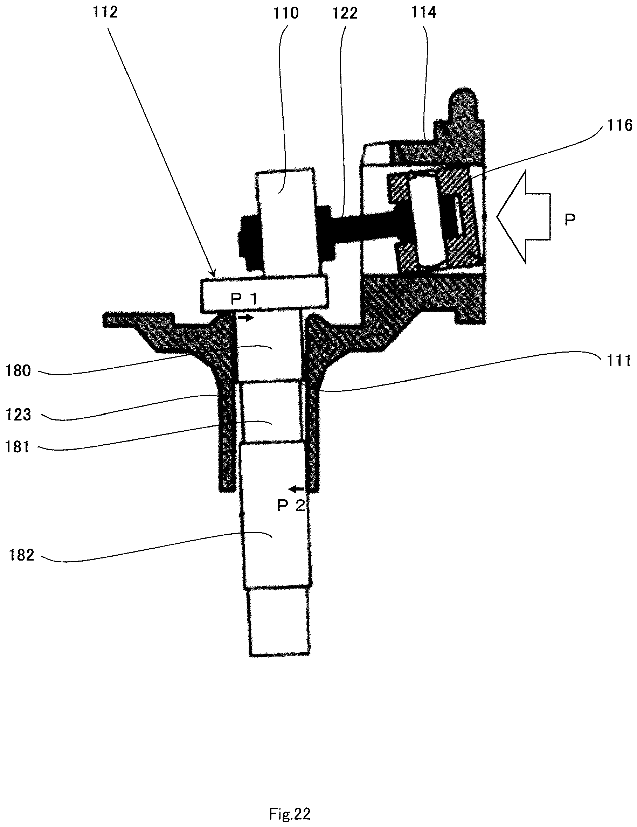

Fig. 22 is a schematic view showing the major components of the compressor in a state in which the main shaft is sliding in the state of partial contact with the bearing section.

As shown in Fig. 22, typically, in the reciprocating compressor, the pressure in the interior of the sealed container 101 is lower than the compression pressure P in the interior of the compression chamber 113 defined by the cylinder 114 and the piston 116, and the main shaft 111 of the crankshaft 112 is partially supported on the eccentric shaft 110 to which the compression load P is applied, in a cantilever manner, by one bearing section 123.

As discussed in Literature (JSME annual meeting Vol. 5-1 (2005) P. 143) of Ito et at., the crankshaft 112 is whirling in an inclined state inside the bearing section 123, due to the compression load P. By comparison, in most cases, the skirt part (facing the eccentric shaft 110) of the piston 116 tends to be inclined downward (hereinafter, this direction will be expressed as "+" side).

When the piston 116 is present in the vicinity of the top dead center in which the compression load P is high and the effect on a sliding loss is significant, the piston 116 is inclined to a large degree to + side, and the crankshaft 112 is inclined inside the bearing section 123 to a largest degree. At this time, a force component P1 of the compression load P at a point at which the upper end of the bearing section 123 and the upper end of the main shaft 111 (first slide section 180) contact each other is largest, and a compression load P2 at a point at which the lower end of the bearing section 123 and the lower end of the main shaft 111 (second slide section 182) contact each other is largest.

Therefore, in a case where the surface treatment film including the solid lubricant with a larger average particle diameter is provided substantially uniformly on the slide surface of the main shaft 111 or the like, the upper end of the bearing section 123 and the upper end of the main shaft 111, contact each other at a point, and the lower end of the bearing section 123 and the lower end of the main shaft 111, contact each other at a point, which increase a surface pressure. For this reason, shifting to steady abrasion occurs early. However, the average particle diameter of the solid lubricant is large, and therefore, a friction coefficient is increased. As a result, it is sometimes difficult to increase the efficiency of the compressor.

In a case where a solid lubricant coating film with a small elastic deformation amount is provided substantially uniformly on the slide surface of the main shaft 111 or the like, the upper end of the bearing section 123 and the upper end of the main shaft 111, contact each other at a point, and the lower end of the bearing section 123 and the lower end of the main shaft 111, contact each other at a point, which increase a surface pressure. For this reason, the solid lubricant coating film is likely to abrade early, or be separated.

On the other hand, in a case where the surface treatment film including the solid lubricant with a smaller average particle diameter is provided substantially uniformly on the slide surface of the main shaft 111 or the like, the abrasion resistance of the solid lubricant of the surface treatment film is low. For this reason, a long time passes until shifting to the steady abrasion occurs and the efficiency of the compressor is increased. Or, the synthetic resin abrades away before shifting to the steady abrasion occurs, and thus the efficiency of sliding cannot be sufficiently increased for a long period of time.

In a case where a solid lubricant coating film with a larger elastic deformation amount is provided on the slide surface of the main shaft 111 or the like, the mechanical strength of the solid lubricant coating film is low. Therefore, a high performance cannot be ensured for a long period of time.

However, in the compressor 100 according to Example 1, even when local-contact sliding occurs, the convex portion of the surface of the solid lubricant 162 with a larger average particle diameter, included in the second coating layer 160b located at an outer side, abrades away, so that the slide surface which is smooth and has a suitable oil sump, i.e., early compatibility surface is formed and shifting to the steady abrasion can take place, at an earlier time.

Thereafter, the second coating layer 160b abrades away, and the first coating layer 160a is exposed as the outer surface. Since the first coating layer 160a includes the solid lubricant 162 with a smaller friction coefficient and a smaller average particle diameter, sliding with low friction and high efficiency can be performed. Because of this, the compressor 100 according to Example 11 is allowed to shift to a steady abrasion state at an earlier time, and thereafter perform an operation with high efficiency while providing a good abrasion characteristic.

In the compressor 100 according to Example 11, even when local-contact sliding occurs, the first coating layer 160a located closer to the base member (inner side) is elastically deformed around a contact point, to perform a buffering effect. This can mitigate a contact surface pressure significantly. In addition, the solid lubricant 162 included in the second coating layer 160b located at the outer side allows the surface treatment film 160 to have high strength and high abrasion resistance with respect to sliding. Thereby, early abrasion and separation of the surface treatment film 160 can be suppressed, and a good friction/abrasion characteristic can be obtained.

In the compressor 100 according to Example 1, the first coating layer 160a including the solid lubricant 162 with a smaller average particle diameter is placed in a location that is closer to the base member. Therefore, the solid lubricant 162 easily enters concave portions of the minute concave-convex portions which are formed on the surface of the main shaft 111. Even if the abrasion of the solid lubricant 162 located in a region of the first coating layer 160a that is closer to the outer surface progresses, the solid lubricant 162 with a large amount is left in a region that is closer to the base member. Therefore, the solid lubricant 162 works for a long period of time.

Although in the present example, the sliding motion in the partial contact state has been described, it is obvious that higher reliability and higher efficiency can be expected in a non-partial contact state.

Although in the present example, the surface treatment film 160 is provided on the first slide section 180 and the second slide section 182 of the main shaft 111 which are more likely to partially contact the bearing section 123, the present invention is not limited to this. For example, instead of providing the surface treatment film 160 on the main shaft 111, the surface treatment film 160 may be provided on the slide surface of the bearing section 123, or on both of the main shaft 111 and the bearing section 123.

Or, for example, the surface treatment film 160 may be provided on the slide surface of at least one of the piston 116 and the cylinder 114 which are assumed to slide in a partial contact state, due to the compression load P. In this case, to increase a productivity, the surface treatment film 160 may be provided on the slide surface of the piston 116, or on the outer peripheral portion of the top side (facing the compression chamber 113) of the piston 116 and the outer peripheral portion of the skirt side (facing the eccentric shaft 110) of the piston 116.

### [Modified example 1]

Next, modified example of the compressor (slide member) according to Example 11 will be described.

In a slide member according to Modified example 1 of Example 11, the solid lubricant of the coating layer located at an inner side, of adjacent coating layers, is lower in content percentage than the solid lubricant of the coating layer located at an outer side, of the adjacent coating layers.

In the slide member according to Modified example 1 of Example 11, the coating layer located at the inner side, of the adjacent coating layers, may be larger in elastic deformation amount than the coating layer located at the outer side, of the adjacent coating layers.

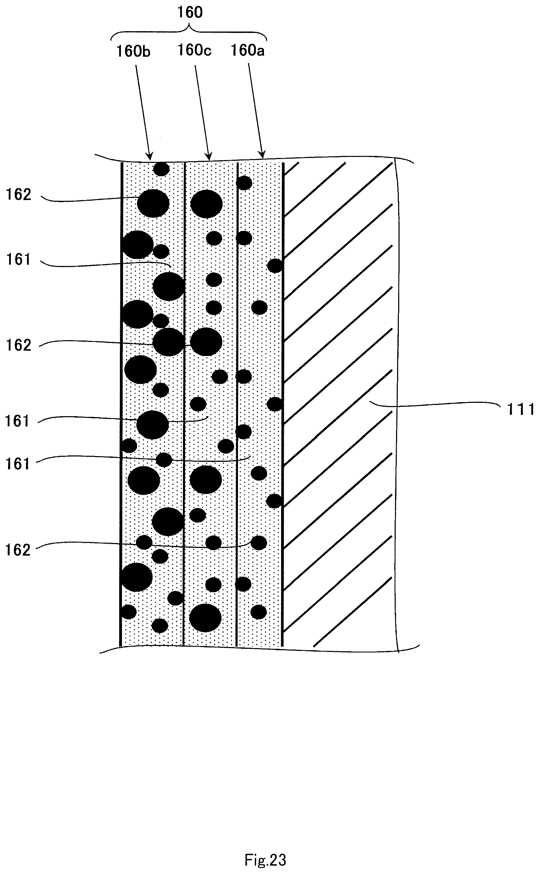

Fig. 23 is a cross-sectional view of a main shaft (slide member) of the compressor according to Modified example 1 of Example 11.

As shown in Fig. 23, the configuration of the surface treatment film 160 provided on the main shaft (slide member) of the compressor according to Modified example 1 is basically the same as that of the surface treatment film 160 of the compressor 100 according to Example 11, except that the surface treatment film 160 includes three layers which are the first coating layer 160a, the second coating layer 160b, and the third coating layer 160c.

Specifically, the third coating layer 160c is placed between the first coating layer 160a and the second coating layer 160b. The first coating layer 160a and third coating layer 160c which are adjacent to each other are configured such that the content percentage of the solid lubricant 162 in the first coating layer 160a is lower than the content percentage of the solid lubricant 162 in the third coating layer 160c. Also, the third coating layer 160c and the second coating layer 160b which are adjacent to each other are configured such that the content percentage of the solid lubricant 162 in the third coating layer 160c is lower than the content percentage of the solid lubricant 162 in the second coating layer 160b.

In this configuration, the elastic deformation amount of the first coating layer 160a can be made larger than the elastic deformation amount of the third coating layer 160c. In addition, the elastic deformation amount of the third coating layer 160c can be made larger than the elastic deformation amount of the second coating layer 160b.

The compressor 100 according to Modified example 1 configured as described above can achieve the same advantages as those of the compressor 100 according to Example 2. In the compressor 100 according to Modified example 1, the content percentage (size) of the solid lubricant 162 changes in a stepwise manner from the inner side to the outer side. This enables smooth sifting from initial abrasion to steady abrasion. As a result, the operation with high efficiency can be performed for a longer period of time. Furthermore, since in the compressor 100 according to Modified example 1, the elastic deformation amount of the coating layers changes in a stepwise manner from the inner side to the outer side, the adhesion force between the coating layers can be increased, and the separation of the surface treatment film 160 from the base member can be suppressed more effectively.

Although in the compressor 100 according to Modified example 1, the surface treatment film 160 includes the three coating layers, the present invention is not limited to this, so long as the surface treatment film 160 includes a plurality of coating layers. For example, the surface treatment film 160 may include four coating layers, or ten or more coating layers.

### (Example 12)

A compressor according to Example 12 comprises an electric component including a stator and a rotor; a compression component activated by the electric component; and a sealed container in which the electric component and the compression component are accommodated and lubricating oil is stored, wherein the compression component includes a crankshaft including a main shaft and an eccentric shaft; a main bearing supporting the crankshaft such that the crankshaft is rotatable; a cylinder block defining a cylinder; a piston which is reciprocatable inside the cylinder; a piston pin mounted to the piston such that a center axis of the piston pin is parallel to the eccentric shaft; and a connecting rod connecting the eccentric shaft and the piston pin to each other, wherein a slide portion of at least one of slide members constituting the compression component is provided with a linear surface treatment film surrounding the slide portion.

In the compressor according to Example 12, a plurality of surface treatment films may be placed in parallel.

In the compressor according to Example 12, the surface treatment film may be placed in parallel to a direction perpendicular to the center axis of the main shaft.

In the compressor according to Example 12, the surface treatment film may have a thickness of 1 to 10µm.

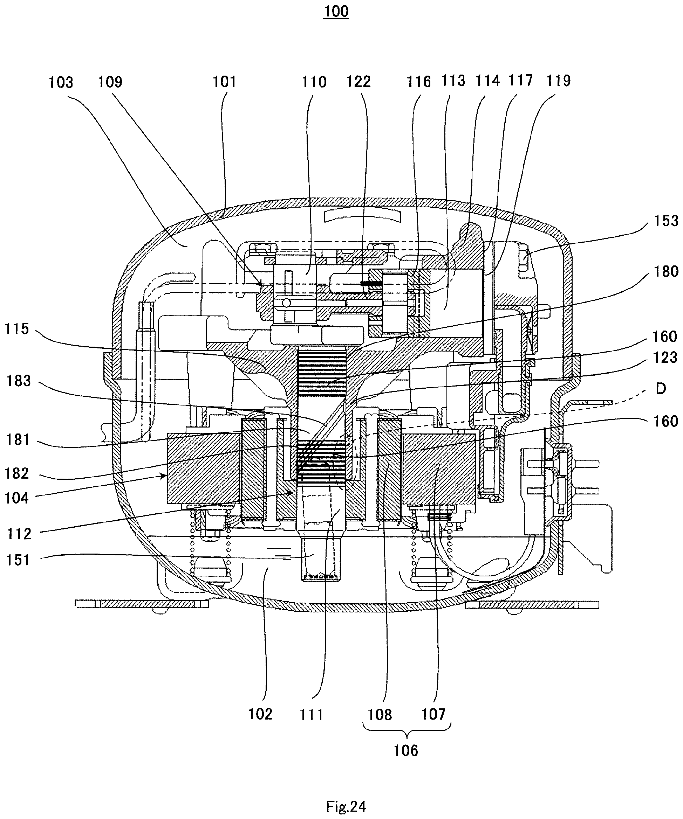

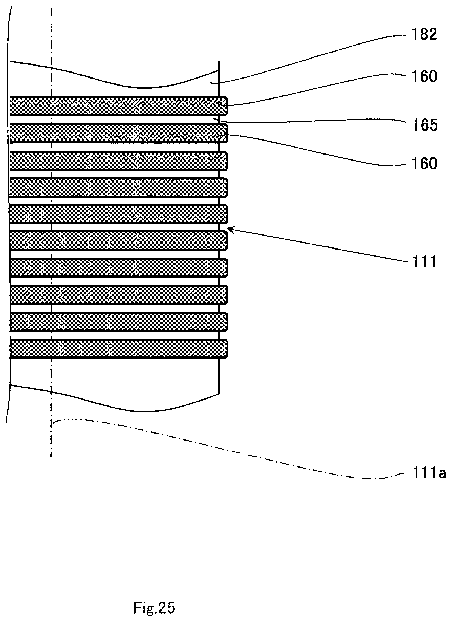

Now, as an exemplary compressor according to Example 12, a case where the slide member is the main shaft of the crankshaft will be described with reference to Figs. 24 and 25. The configuration of the compressor 100 according to Example 12 may be the same as that of the compressor 100 according to any one of Example 1 to Example 10, except for the above feature.

### [Configuration of compressor]

Fig. 24 is a vertical sectional view of a compressor according to Example 12. Fig. 25 is an enlarged cross-sectional view of D-part of Fig. 24.

As shown in Figs. 24 and 25, the configuration of the compressor 100 according to Example 12 is basically the same as that of the compressor 100 according to Example 11, except that linear surface treatment films 160 are provided on the first slide section 180 and the second slide section 182 of the main shaft 111.

In Example 12, specifically, the plurality of surface treatment films 160 have a linear shape (ring shape). The plurality of surface treatment films 160 are placed in parallel with each other in the direction perpendicular to the center axis 111a of the main shaft 111. A recessed groove 165 is provided between adjacent surface treatment films 160.

The length of the surface treatment film 160 in the direction of the center axis 111a may be set suitably depending on the operation conditions of the compressor 100, etc., and may be, for example, about 1mm. The length of the recessed groove 165 in the direction of the center axis 111a may be set suitably depending on the operation conditions of the compressor 100, etc., and may be, for example, about 0.5mm.

The thickness of the surface treatment film 160 may be equal to or larger than 1µm to increase the productivity of the surface treatment film 160, and may be equal to or smaller than 10µm to fill the lubricating oil 102 with a sufficient amount in the recessed groove 165 to improve the sliding characteristic of the surface treatment film 160. Or, the thickness of the surface treatment film 160 may be equal to or larger than 3µm and equal to or smaller than 6µm to improve the sliding characteristic of the surface treatment film 160 and efficiently manufacture the surface treatment film 160.

For example, in the vicinity of the upper end of the first slide section 180 which tends to slide in a lubrication region where both of the solid lubricant and the lubricating oil are present, and in the vicinity of the lower end of the second slide section 182 which tends to slide in a lubrication region where both of the solid lubricant and the lubricating oil are present, the width of the recessed groove 165 may be made smaller to increase the area of actual sliding of the surface treatment film 160, to improve an abrasion resistance. In contrast, in the vicinity of the lower end of the first slide section 180 which tends to slide in a lubrication region where the lubricating oil is present, and in the vicinity of the upper end of the second slide section 182 which tends to slide in a lubrication region where the lubricating oil is present, the width of the recessed groove 165 may be made larger to reduce the area of actual sliding of the surface treatment film 160, to reduce a sliding loss.

The surface treatment film 160 may include a single coating layer as in the surface treatment film 160 according to Example 1, or two or more coating layers as in the surface treatment film 160 according to Example 2 (including Modified example 1 of Example 2).

### [Manufacturing method of surface treatment film]

Next, the manufacturing method of the surface treatment film 160 according to the present invention will be described with reference to Figs. 24 to 27.

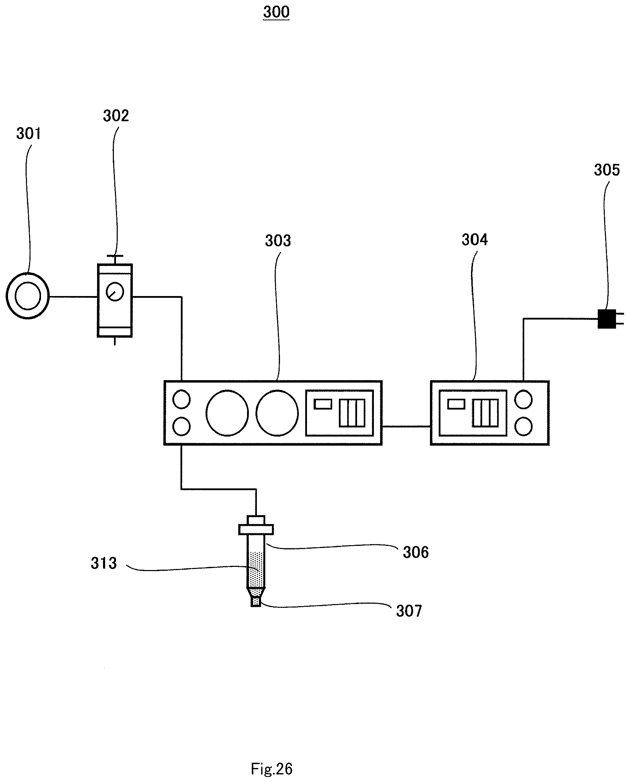

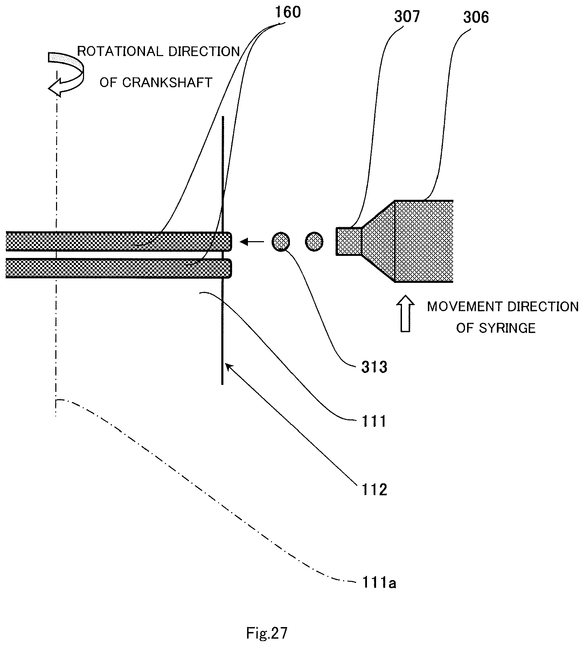

Fig. 26 is a schematic view showing the configuration of a pneumatic syringe dispenser device. Fig. 27 is a schematic view showing the outline of manufacturing a surface treatment film, by using the device of Fig. 26.

Initially, the configuration of the pneumatic syringe dispenser device will be described with reference to Fig. 26.

As shown in Fig. 26, the pneumatic syringe dispenser device 300 includes an air source 301, a regulator 302, a discharge timer 303, a controller 304, an electric power supply 305, a syringe 306, and a nozzle 307. The dispenser refers to a fixed-amount liquid discharge system. The dispenser is able to stably supply a coating agent 313 with a target amount and inject and apply liquid droplets of the coating agent 313 in succession to a work (corresponding to the main shaft 111 of the crankshaft 112 in the present embodiment).

Next, the manufacturing method of the surface treatment film 160 will be described with reference to Figs. 24 to 27.

Initially, preliminary heating is conducted to increase the temperature of the crankshaft 112 up to a predetermined temperature (only a region which is in the vicinity of the first slide section 180 and the second slide section 182 of the main shaft 111 may be heated in this heating). This is intended to cause the coating agent 313 to easily adhere onto the main shaft 111.

Then, prepared is the coating agent 313 with a specified viscosity which is produced by adjusting a liquid agent including the synthetic resin 161 and the solid lubricant 162 dispersed in the synthetic resin 161 with a diluting agent comprising an organic agent. Then, this coating agent 313 is poured into the syringe 306. Then, the crankshaft 112 is rotated in a clockwise direction around the center axis 111a, and the coating agent 313 is injected and applied with a specified target amount to a particular region at a constant speed and at constant intervals, from the nozzle 307, in a state in which the syringe 306 of the pneumatic syringe dispenser device 300 is fixed.

At a stage in which a single linear surface treatment film 160 has been formed to extend along the outer periphery of the main shaft 111, the injection and application of the coating agent 313 from the nozzle 307 are ceased. The syringe 306 is moved upward (or downward), and the injection and application of the coating agent 313 from the nozzle 307 are performed. At this time, by adjusting the movement amount of the syringe 306, a region to which the coating agent 313 is not applied, i.e., the recessed groove 165 is formed. This is repeated, and thus the plurality of surface treatment films 160 and the recessed grooves 165 (surface treatment film 160 and recessed groove 165 are parallel to each other) can be formed independently on the first slide section 180 and the second slide section 182 of the main shaft 111.

Thereafter, drying is temporarily conducted for several minutes under a temperature which is slightly higher than the temperature in the preliminary heating. At a stage in which the surface of the surface treatment film 160 is cured, buffing is conducted a little in order to finely adjust the surface roughness of the surface treatment film 160. Desirably, a buff used in the buffing is a horse hair buff, rather than a nylon buff containing abrasive grains or a relatively hard steel buff.

Finally, calcining is conducted under a temperature of about 200 degrees C to 250 degrees C for about 30 minutes to 2 hours, to vaporize the diluting agent in the coating agent 313. In this way, the surface treatment film 160 is allowed to completely adhere to the first slide section 180 and the second slide section 182.

By using the compressor 100 according to Example 12 manufactured by the above described method, an actual device reliability test was conducted under conditions including a mode in which it was assumed that the main shaft 111 and the bearing section 123 slid relatively in harsh conditions and the lubricating oil 102 with a sufficient amount between the slide members could not be ensured. As a result, the compressor 100 according to Example 12 had a good abrasion characteristic as compared to the conventional compressor. The present inventors estimated that such a result was obtained for the reasons described below.

In some situations, the lubricating oil 102 with a sufficient amount between the main shaft 111 and the bearing section 123 cannot be ensured. Because of the recessed grooves 165 each of which is formed between the surface treatment films 160, the main shaft 111 made of metal is exposed. In this state, due to a surface tension, the lubricating oil 102 is easily filled in the recessed grooves 165. The lubricating oil 102 filled in the recessed grooves 165 moves to the slide portions of the surface treatment films 160 and the slide portion of the bearing section 123, and thereby the lubricating oil 102 can be retained on the slide surfaces well. This can effectively suppress the abrasion of the surface treatment films 160 and ensure a high abrasion resistance.

The compressor 100 according to Example 12 configured as described above can achieve the same advantages as those of the compressor 100 according to Example 11.

### [Modified example 1]

Next, the modified example of the compressor (contact member) according to Example 12 will be described.

A compressor according to Modified example 1 of Example 12 comprises an electric component including a stator and a rotor; a compression component activated by the electric component; and a sealed container in which the electric component and the compression component are accommodated and lubricating oil is stored, wherein the compression component includes a crankshaft including a main shaft and an eccentric shaft; a main bearing supporting the crankshaft such that the crankshaft is rotatable; a cylinder block defining a cylinder; a piston which is reciprocatable inside the cylinder; a piston pin mounted to the piston such that a center axis of the piston pin is parallel to the eccentric shaft; and a connecting rod connecting the eccentric shaft and the piston pin to each other, wherein a slide portion of at least one of slide members constituting the compression component is provided with a linear surface treatment film surrounding the slide portion.

In the compressor according to Modified example 1 of Example 12, the surface treatment film may be placed in a spiral shape with an upward slope extending in a direction that is opposite to the rotational direction of the crankshaft.

In the compressor according to Modified example 1 of Example 12, the main shaft may be provided on a surface thereof with a spiral groove with an upward slope extending in a direction that is opposite to the rotational direction of the crankshaft, and the surface treatment film may have the inclination angle with respect to the center axis of the main shaft which angle is smaller than the inclination angle of the groove with respect to the center axis of the main shaft.

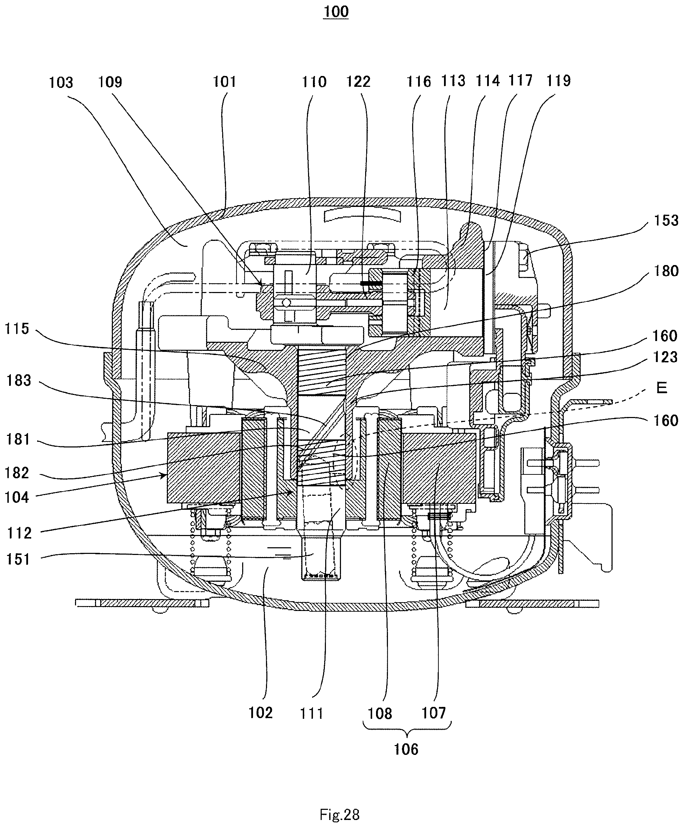

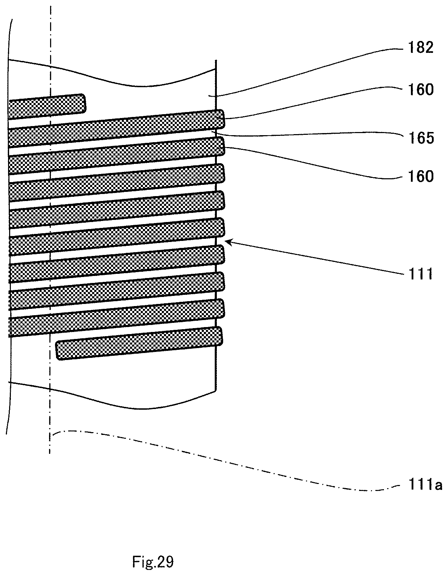

Fig. 28 is a vertical sectional view of a compressor according to Modified example 1 of Example 12. Fig. 29 is an enlarged cross-sectional view of E-part of Fig. 28.

As shown in Figs. 28 and 29, the configuration of the compressor 100 according to Modified example 1 of Example 12 is basically the same as that of the compressor 100 according to Example 12, except that the surface treatment film 160 is placed in a spiral shape with an upward slope extending in a direction that is opposite to the rotational direction of the crankshaft 112.

Specifically, the surface treatment film 160 is configured such that the inclination angle with respect to the center axis 111a of the main shaft 111 is smaller than the inclination angle of the groove 183 of the oil feeding mechanism 151 with respect to the center axis 111a of the main shaft 111. In other words, the inclination angle of the recessed groove 165 with respect to the center axis 111a is smaller than the inclination angle of the groove 183 of with respect to the center axis 111a.

The manufacturing method of the surface treatment film 160 according to Modified example 1 is the same as that of the face treatment film 160 of according to Example 12, and therefore will not be described in detail repeatedly.

By using the compressor 100 according to Modified example 1 configured as described above, an actual device reliability test was conducted under conditions including a mode in which it was assumed that the main shaft 111 and the bearing section 123 slid relatively in harsh conditions and the lubricating oil 102 with a sufficient amount between the slide members could not be ensured. As a result, the compressor 100 according to Modified example 1 had a good abrasion characteristic as compared to the conventional compressor. The present inventors estimated that such a result was obtained for the reasons described below.

In some situations, the lubricating oil 102 with a sufficient amount between the main shaft 111 and the bearing section 123 cannot be ensured. As in the compressor 100 according to Example 12, in the compressor 100 according to Modified example 1, because of the surface tension of the recessed grooves 165 each of which is formed between the surface treatment films 160, the lubricating oil 102 is easily filled in the recessed grooves 165. The lubricating oil 102 filled in the recessed grooves 165 moves to the slide portions of the surface treatment films 160 and the slide portion of the bearing section 123, and thereby the lubricating oil 102 can be retained on the slide surfaces well. This can effectively suppress the abrasion of the surface treatment films 160 and ensure a high abrasion resistance.

It is also estimated that the recessed groove 165 of the spiral shape formed between the surface treatment films 160 serves as an oil pump passage which transports the lubricating oil 102 to the upper side of the main shaft, against a gravitational force. In addition, in Modified example 1, the surface treatment film 160 is configured such that the inclination angle of the recessed groove 165 with respect to the center axis 111a is smaller than the inclination angle of the groove 183 with respect to the center axis 111a. Because of this, the recessed groove 165 makes it possible to transport the lubricating oil 102 with a sufficient amount to an upper side even in a low-speed operation mode, and supply the lubricating oil 102 with a sufficient amount to the surface treatment film 160 and the slide surface of the bearing section 123.

The compressor 100 according to Modified example 1 configured as described above can achieve the same advantages as those of the compressor 100 according to Example 12. In addition, in the compressor 100 according to Modified example 1, during the operation of the compressor 100 in the low-speed operation node by the inverter driving circuit as described above, the lubricating oil 102 can be supplied with a sufficient amount to the surface treatment film 160 and the slide surface of the bearing section 123, and as a result, a good abrasion characteristic can be ensured.

### Industrial Applicability

A contact member, a slide member, a compressor including comprising the contact member or the slide member, and a manufacturing method of the compressor, can maintain the performance for a long period of time, or improve the performance. Therefore, these are widely applicable to examples using refrigeration cycles, such as home refrigerators, air conditioners, dehumidification machines, show cases, vending machines, etc..

A manufacturing method of the compressor can realize the compressor which can maintain the performance for a long period of time, or improve the performance, and the compressor is widely applicable to examples using refrigeration cycles, such as home refrigerators, air conditioners, dehumidification machines, show cases, vending machines, etc..

### Reference Signs List

- 100: compressor
- 101: sealed container
- 102: lubricating oil
- 103: refrigerant
- 104: compressor body
- 105: suspension spring
- 106: electric component
- 107: stator
- 108: rotor
- 109: compression component
- 110: eccentric shaft
- 111: main shaft
- 111a: center axis
- 112: crankshaft
- 113: compression chamber
- 114: cylinder
- 115: block
- 116: piston
- 117: valve plate
- 118: suction plate
- 119: discharge hole
- 120: suction valve
- 120a: opening/closing section
- 121: discharge valve
- 122: connecting means
- 123: bearing section
- 130: spring reed
- 131: valve stop
- 132: recessed portion
- 141: suction valve seat
- 142: discharge valve seat
- 150: suction pipe
- 151: oil feeding mechanism
- 152: cylinder head
- 153: head bolt
- 154: suction muffler
- 156: head space
- 157: discharge pipe
- 160: surface treatment film
- 160a: first coating layer
- 160b: second coating layer
- 160c: third coating layer
- 161: synthetic resin
- 162: solid lubricant
- 163: contact portion
- 164: contact portion
- 165: recessed groove
- 180: first slide section
- 181: connecting section
- 182: second slide section
- 183: groove
- 300: pneumatic syringe dispenser device
- 301: air source
- 302: regulator
- 303: discharge timer
- 304: controller
- 305: electric power supply
- 306: syringe
- 307: nozzle
- 313: coating agent

## Claims

1. A manufacturing method of a compressor (100) comprising a slide member including a surface treatment film (160) including two or more coating layers (160a, 160b, 160c) stacked together, in at least a portion of a slide surface thereof, the manufacturing method comprising:
(A1) preparing a first surface treatment agent including synthetic resin (161) and a solid lubricant (162);
(A2) preliminarily heating at least a portion of the slide surface and applying the first surface treatment agent to at least a portion of the slide surface;
(A3) temporarily conducting drying for several minutes under a temperature which is higher than a temperature in preliminary heating to form a first coating layer (160a);
(B1) preparing a second surface treatment agent including a solid lubricant (162) with a larger average particle diameter than the solid lubricant (162) of the first surface treatment agent;
(B2) applying the second surface treatment agent onto the first coating layer (160a) and temporarily conducting drying under a temperature which is higher than the temperature in the preliminary heating to cure a surface of a second coating layer (160b);
(B3) buffing the surface of the second coating layer (160b), after (B2); and
(B4) conducting calcining under a temperature of about 200 degrees C to 250 degrees C for about 30 minutes to 2 hours, to make the surface treatment film (160) including the first coating layer (160a) and the second coating layer (160b) adhere onto at least a portion of the slide surface, after (B3).

2. The manufacturing method according to claim 1,
wherein each of the coating layers (160a, 160b, 160c) includes synthetic resin (161) and a solid lubricant (162), and
wherein a volume percentage which is a content percentage of the solid lubricant (162) of the coating layer (160a) located at an innermost side is lower than a volume percentage which is a content percentage of the solid lubricant (162) of the coating layer (160b) located at an outermost side.

3. The manufacturing method according to claim 2,
wherein the synthetic resin (161) of the coating layer (160a) located at the innermost side is larger in elastic deformation amount than the synthetic resin (161) of the coating layer (160b) located at the outermost side.

4. The manufacturing method according to claim 2 or 3,
wherein a surface roughness of an outer surface of the surface treatment film (160) is adjusted by buffing.

5. The manufacturing method according to any one of claims 1 to 4,
wherein a volume percentage which is a content percentage of the solid lubricant (162) of the coating layer (160a) located at an inner side, of adjacent coating layers (160a, 160b, 160c), is lower than a volume percentage which is a content percentage of the solid lubricant (162) of the coating layer (160b) located at an outer side, of the adjacent coating layers (160a, 160b, 160c).

6. The manufacturing method according to any one of claims 1 to 5,
wherein the solid lubricant (162) comprises at least one compound selected from a compound group consisting of molybdenum disulfide, graphite, polytetrafluoroethylene resin, and antimony trioxide.

7. The manufacturing method according to any one of claims 1 to 6,
wherein the solid lubricant (162) of the coating layer (160a) located at the innermost side is smaller in average particle diameter than the solid lubricant (162) of the coating layer (160b) located at the outermost side.

8. The manufacturing method according to any one of claims 1 to 7,
wherein the surface treatment film (160) has a thickness of 1 µm to 10 µm.

9. The manufacturing method according to any one of claims 1 to 8,
wherein the synthetic resin (161) comprises at least one resin selected from a resin group consisting of polyamide-imide resin, epoxy resin, and phenol resin.

## Patentansprüche

1. Herstellungsverfahren für einen Kompressor (100), der ein Gleitelement mit einem Oberflächenbehandlungsfilm (160) aufweist, der zwei oder mehr miteinander gestapelte Überzugsschichten (160a, 160b, 160c) in wenigstens einem Teil einer Gleitfläche davon aufweist, wobei das Herstellungsverfahren umfasst:
(A1) Vorbereiten eines ersten Oberflächenbehandlungsmittels, das Kunstharz (161) und ein festes Schmiermittel (162) enthält;
(A2) vorbereitendes Erwärmen wenigstens eines Teils der Gleitoberfläche und Aufbringen des ersten Oberflächenbehandlungsmittels auf wenigstens einen Teil der Gleitoberfläche;
(A3) vorübergehendes Durchführen einer mehrminütigen Trocknung unter einer Temperatur, die höher ist als eine Temperatur bei dem vorbereitenden Erwärmen, um eine erste Überzugsschicht (160a) zu bilden;
(B1) Vorbereiten eines zweiten Oberflächenbehandlungsmittels, das ein festes Schmiermittel (162) mit einem größeren durchschnittlichen Teilchendurchmesser als das feste Schmiermittel (162) des ersten Oberflächenbehandlungsmittels enthält;
(B2) Aufbringen des zweiten Oberflächenbehandlungsmittels auf die erste Überzugsschicht (160a) und vorübergehendes Durchführen einer Trocknung unter einer Temperatur, die höher ist als die Temperatur bei dem vorbereitenden Erwärmen, um eine Oberfläche einer zweiten Überzugsschicht (160b) zu härten;
(B3) Polieren der Oberfläche der zweiten Überzugsschicht (160b) nach (B2); und
(B4) Durchführen einer Kalzinierung unter einer Temperatur von etwa 200°C bis 250°C für etwa 30 Minuten bis 2 Stunden nach (B3), um den Oberflächenbehandlungsfilm (160) einschließlich der ersten Überzugsschicht (160a) und der zweiten Überzugsschicht (160b) auf wenigstens einem Teil der Gleitoberfläche haften zu lassen.

2. Herstellungsverfahren nach Anspruch 1,
wobei jede der Überzugsschichten (160a, 160b, 160c) Kunstharz (161) und ein festes Schmiermittel (162) enthält, und
wobei ein Volumenprozentsatz, der ein Gehaltsprozentsatz des festen Schmiermittels (162) der Überzugsschicht (160a) ist, die sich an einer innersten Seite befindet, niedriger ist als ein Volumenprozentsatz, der ein Gehaltsprozentsatz des festen Schmiermittels (162) der Überzugsschicht (160b) ist, die sich an einer äußersten Seite befindet.

3. Herstellungsverfahren nach Anspruch 2,
wobei das Kunstharz (161) der Überzugsschicht (160a), die sich an der innersten Seite befindet, einen größeren elastischen Verformungsbetrag aufweist als das Kunstharz (161) der Überzugsschicht (160b), die sich an der äußersten Seite befindet.

4. Herstellungsverfahren nach Anspruch 2 oder 3,
wobei eine Oberflächenrauheit einer äußeren Oberfläche des Oberflächenbehandlungsfilms (160) durch Polieren eingestellt wird.

5. Herstellungsverfahren nach einem der Ansprüche 1 bis 4,
wobei ein Volumenprozentsatz, der ein Gehaltsprozentsatz des festen Schmiermittels (162) der an einer Innenseite befindlichen Überzugsschicht (160a) von benachbarten Überzugsschichten (160a, 160b, 160c) ist, niedriger ist als ein Volumenprozentsatz, der ein Gehaltsprozentsatz des festen Schmiermittels (162) der an einer Außenseite befindlichen Überzugsschicht (160b) von benachbarten Überzugsschichten (160a, 160b, 160c) ist.

6. Herstellungsverfahren nach einem der Ansprüche 1 bis 5,
wobei das feste Schmiermittel (162) wenigstens eine Verbindung umfasst, die aus einer Verbindungsgruppe ausgewählt ist, die aus Molybdändisulfid, Graphit, Polytetrafluorethylenharz und Antimontrioxid besteht.

7. Herstellungsverfahren nach einem der Ansprüche 1 bis 6,
wobei das feste Schmiermittel (162) der Überzugsschicht (160a), die sich an der innersten Seite befindet, einen kleineren durchschnittlichen Teilchendurchmesser aufweist als das feste Schmiermittel (162) der Überzugsschicht (160b), die sich an der äußersten Seite befindet.

8. Herstellungsverfahren nach einem der Ansprüche 1 bis 7,
wobei der Oberflächenbehandlungsfilm (160) eine Dicke von 1 µm bis 10 µm aufweist.

9. Herstellungsverfahren nach einem der Ansprüche 1 bis 8,
wobei das Kunstharz (161) wenigstens ein Harz umfasst, das aus einer Harzgruppe ausgewählt ist, die aus Polyamid-Imid-Harz, Epoxidharz und Phenolharz besteht.

## Revendications

1. Procédé de fabrication d'un compresseur (100) comprenant un élément coulissant comprenant un film de traitement de surface (160) comprenant deux ou plusieurs couches de revêtement (160a, 160b, 160c) empilées ensemble, dans au moins une partie d'une surface de glissement correspondante, le procédé de fabrication comprenant:
(A1) la préparation d'un premier agent de traitement de surface comprenant de la résine synthétique (161) et un lubrifiant solide (162);
(A2) le chauffage préliminaire d'au moins une partie de la surface de glissement et l'application du premier agent de traitement de surface sur au moins une partie de la surface de glissement;
(A3) la réalisation temporaire d'un séchage pendant plusieurs minutes à une température qui est supérieure à une température lors du chauffage préliminaire pour former une première couche de revêtement (160a);
(B1) la préparation d'un deuxième agent de traitement de surface comprenant un lubrifiant solide (162) présentant un diamètre moyen de particule supérieur à celui du lubrifiant solide (162) du premier agent de traitement de surface;
(B2) l'application du deuxième agent de traitement de surface sur la première couche de revêtement (160a) et la réalisation temporaire d'un séchage à une température qui est supérieure à la température lors du chauffage préliminaire pour durcir une surface d'une deuxième couche de revêtement (160b);
(B3) après (B2), le polissage de la surface de la deuxième couche de revêtement (160b); et
(B4) après (B3), la réalisation d'une calcination à une température d'environ 200°C à 250°C pendant environ 30 minutes à 2 heures, pour provoquer l'adhérence du film de traitement de surface (160) comprenant la première couche de revêtement (160a) et la deuxième couche de revêtement (160b) sur au moins une partie de la surface de glissement.

2. Procédé de fabrication selon la revendication 1,
chacune des couches de revêtement (160a, 160b, 160c) comprenant une résine synthétique (161) et un lubrifiant solide (162) et
un pourcentage en volume qui est un pourcentage de teneur en lubrifiant solide (162) de la couche de revêtement (160a) située au niveau d'un côté le plus à l'intérieur étant inférieur à un pourcentage en volume qui est un pourcentage de teneur en lubrifiant solide (162) de la couche de revêtement (160b) située au niveau d'un côté le plus à l'extérieur.

3. Procédé de fabrication selon la revendication 2,
la quantité de déformation élastique de la résine synthétique (161) de la couche de revêtement (160a) située au niveau du côté le plus à l'intérieur étant supérieure à celle de la résine synthétique (161) de la couche de revêtement (160b) située au niveau du côté le plus à l'extérieur.

4. Procédé de fabrication selon la revendication 2 ou 3,
une rugosité de surface d'une surface externe du film de traitement de surface (160) étant ajustée par polissage.

5. Procédé de fabrication selon l'une quelconque des revendications 1 à 4,
un pourcentage en volume qui est un pourcentage de teneur en lubrifiant solide (162) de la couche de revêtement (160a) située sur un côté interne, de couches de revêtement adjacentes (160a, 160b, 160c), étant inférieur à un pourcentage en volume qui est un pourcentage de teneur en lubrifiant solide (162) de la couche de revêtement (160b) située sur un côté externe, des couches de revêtement adjacentes (160a, 160b, 160c).

6. Procédé de fabrication selon l'une quelconque des revendications 1 à 5,
le lubrifiant solide (162) comprenant au moins un composé choisi dans un groupe de composés constitué par le disulfure de molybdène, le graphite, une résine de polytétrafluoroéthylène et le trioxyde d'antimoine.

7. Procédé de fabrication selon l'une quelconque des revendications 1 à 6,
le diamètre moyen de particule du lubrifiant solide (162) de la couche de revêtement (160a) située au niveau du côté le plus à l'intérieur étant plus petit que celui du lubrifiant solide (162) de la couche de revêtement (160b) située au niveau du côté le plus à l'extérieur.

8. Procédé de fabrication selon l'une quelconque des revendications 1 à 7,
le film de traitement de surface (160) présentant une épaisseur de 1 µm à 10 µm.

9. Procédé de fabrication selon l'une quelconque des revendications 1 à 8,
la résine synthétique (161) comprenant au moins une résine choisie dans un groupe de résines constitué par une résine polyamide-imide, une résine époxy et une résine phénolique.
